(19) Europäisches Patentamt

European Patent Office

Office européen des brevets

(11) **EP 4 672 221 A1**

(12) **EUROPEAN PATENT APPLICATION**

(43) Date of publication:
**31.12.2025 Bulletin 2026/01**

(21) Application number: **25185252.1**

(22) Date of filing: **25.06.2025**

(51) International Patent Classification (IPC):
*G09G 5/10* (2006.01)

(52) Cooperative Patent Classification (CPC):
**G09G 5/10;** G09G 2310/0232; G09G 2320/0233;
G09G 2320/0242; G09G 2320/0276;
G09G 2320/0673; G09G 2320/0686; G09G 2354/00

---

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.06.2024 US 202463665037 P
20.06.2025 US 202519244880**

(71) Applicant: **Meta Platforms Technologies, LLC
Menlo Park, CA 94025 (US)**

(72) Inventors:
• **Martinez, Misael Perez
Menlo Park (US)**
• **Sivakumar, Balasubramanian
Menlo Park (US)**
• **In, Hai Jung
Menlo Park (US)**
• **Wang, Qianqian
Menlo Park (US)**
• **Kitsomboonloha, Rungrot
Menlo Park (US)**

(74) Representative: **Murgitroyd & Company
165-169 Scotland Street
Glasgow G5 8PL (GB)**

---

(54) **VOLTAGE ADJUSTMENT BASED MURA REDUCTION IN DIGITAL CONTENT**

(57) Systems and methods for adjusting brightness of content output on one or more displays is provided. One such method comprises determining a brightness difference between peripheral regions of the display and a foveal region of the display, and adjusting, responsive to the determining, the brightness difference by applying a set of peripheral region gamma based voltages to the peripheral regions and an additional foveal region gamma based voltages to foveal region, and setting a peripheral region common voltage to the peripheral regions and a foveal region common voltage to the foveal region.

100

**FIG. 1**

EP 4 672 221 A1

# Description

## TECHNICAL FIELD

The present disclosure relates generally to mura reduction in digital content.

## BACKGROUND

Rendering and displaying digital content on electronic devices operating in various environments - such as televisions, smartphones, devices that support artificial reality and virtual reality based features and functionalities - is a critical part of delivering superior visual experiences to consumers. However, traditional techniques of displaying digital content often suffer from various deficiencies that impact image fidelity and user satisfaction. One persistent issue is the inability of these techniques to achieve uniform brightness and color across the entire display surface, leading to visible inconsistencies that detract from the intended visual presentation. These inconsistencies can be exacerbated by limitations in display hardware, manufacturing variances, and suboptimal rendering algorithms, resulting in artifacts such as banding, color shifts, and uneven luminance. Such inconsistences lead to a poor visual experience for users.

A particularly notable manifestation of these deficiencies is the phenomenon known as "mura," a Japanese term meaning "unevenness" or "blemish." Mura refers to non-uniformities in the display, such as patches, streaks, or cloudy areas, which become especially apparent in low gray levels or uniform color fields. Mura can arise from variations in panel materials, backlighting inconsistencies, or pixel-level defects, and is often difficult to correct through traditional calibration or compensation techniques. The presence of mura not only diminishes the aesthetic quality of digital content but can also impair the readability and usability of information displayed, making it a significant challenge for manufacturers and consumers alike. Addressing these deficiencies requires advanced solutions that compensate for non-uniformities and enhance the overall rendering and display quality of digital content.

## SUMMARY

According to a first aspect, there is provided a computer-implemented method comprising: determining a brightness difference between peripheral regions of a display and a foveal region of the display; and adjusting, responsive to the determining, the brightness difference by: applying a set of peripheral region gamma voltages to the peripheral regions and an additional set of foveal gamma voltages to the foveal region; and setting a peripheral region common voltage to the peripheral regions and a foveal region common voltage to the foveal region.

A top boundary of the foveal region may be contiguous with a boundary of one of the peripheral regions. A bottom boundary of the foveal region may be contiguous with a boundary of an additional one of the peripheral regions.

The set of peripheral region gamma voltages may correspond to a collection of reference voltages. Each reference voltage in the collection of reference voltages may correspond to a respective digital input value.

The additional set of foveal region gamma voltages may correspond to an additional collection of reference voltages. Each reference voltage in the additional collection of reference voltages may correspond to a respective additional digital input value.

Each respective digital input value may correspond to a respective luminance value specific to at least a pixel in at least one of the peripheral regions. Each additional respective digital input value may correspond to a respective additional luminance value specific to at least an additional pixel in foveal region.

The computer-implemented method may further comprise including a pause period for a predefined time frame after the setting of the set of peripheral region gamma voltages.

The computer-implemented method may further comprise applying a peripheral region gate signal to a set of pixels in at least one of the peripheral regions. The computer-implemented method may further comprise applying a foveal region gate signal to a set of pixels in foveal region.

One or each of the peripheral region gate signal and foveal region gate signal may be a pulsed voltage.

The computer-implemented method may further comprise applying peripheral region pixel timing parameters to a set of pixels in at least one of the peripheral regions.

The computer-implemented method may further comprise applying foveal region pixel timing parameters to a set of pixels in foveal region.

The peripheral region pixel timing parameters and foveal region pixel timing parameters may correspond to a demultiplexer on time parameter, a demultiplexer dead time parameter, or a source driver signal.

According to a second aspect, there is provided a system comprising: at least one physical processor; a display; physical memory comprising computer-executable instructions that, when executed by the physical processor, cause the physical processor to carry out the method of the first aspect.

According to a third aspect, there is provided a computer-readable medium comprising one or more computer-executable instructions that, when executed by at least one processor of a computing device, cause the computing device to carry out the method of the first aspect.

According to a fourth aspect, there is provided a computer program product comprising instructions that, when executed by at least one processor of a computing device, cause the computing device to carry out the method of the first aspect.

## BRIEF DESCRIPTION OF THE DRAWINGS

The accompanying drawings illustrate a number of examples and are a part of the specification. Together with the following description, these drawings demonstrate and explain various principles of the present disclosure.

FIG. 1 is a flow diagram of an exemplary computer-implemented method for adjusting a brightness difference between regions of a display that includes foveated digital content.

FIG. 2 is an illustration of an example artificial-reality system.

FIG. 3 is an illustration of an example artificial-reality system with a handheld device.

FIG. 4A is an illustration of example user interactions within an artificial-reality system.

FIG. 4B is an illustration of example user interactions within an artificial-reality system.

FIG. 5A is an illustration of example user interactions within an artificial-reality system.

FIG. 5B is an illustration of example user interactions within an artificial-reality system.

FIG. 6 is an illustration of an example wrist-wearable device of an artificial-reality system.

FIG. 7 is an illustration of an example wearable artificial-reality system.

FIG. 8 is an illustration of an example augmented-reality system.

FIG. 9A is an illustration of an example virtual-reality system.

FIG. 9B is an illustration of another perspective of the virtual-reality systems shown in FIG. 9A.

FIG. 10 is a block diagram showing system components of example artificial- and virtual-reality systems.

FIG. 11 illustrates a processor facilitating output of digital content, having non-uniform resolution characteristics, on a display.

FIG. 12 illustrates a timing diagram of a display configured to output foveated digital content.

FIG. 13 is an expanded illustration of the timing diagram with an additional graphical representation depicting the adjustment of pixel timing of a plurality of pixels.

FIG. 14 illustrates two gate signals being applied to two rows of pixels.

FIG. 15 depicts a reduced voltage kickback as a result of delayed application of example gate signals.

FIG. 16 illustrates a graphical representation in which digital content is output according to different gamma based source voltages on different areas of a display.

FIG. 17 illustrates mixed zones at two boundaries of digital content output on a display.

Throughout the drawings, identical reference characters and descriptions indicate similar, but not necessarily identical, elements. While the examples described herein are susceptible to various modifications and alternative forms, specific examples have been shown by way of example in the drawings and will be described in detail herein. However, the examples described herein are not intended to be limited to the particular forms disclosed. Rather, the present disclosure covers all modifications, equivalents, and alternatives falling within the scope of the appended claims.

## DETAILED DESCRIPTION

The systems and methods described here address and overcome the above described deficiencies of prior-known systems by dynamically adjusting various parameters that control the ability of pixels to output digital content of varying fidelity levels on display. In this way, the systems and methods detailed herein correct instances of mura, enhance the overall rendering and display quality of digital content, improve visual experiences of users. In aspects, these systems and methods generate and apply a combination of different voltages to different rows of pixels in order to reduce the luminance or brightness differences between regions of the peripheral regions and foveal regions of a display. In other aspects, these methods and systems incorporate a delay or pause period of a predefined time frame in conjunction with the combination of different voltages to different rows of pixels, which ensures that each of the voltages settle - complete a transition from an initial value to a final value, e.g., from 0 V to 1V.

Luminance differences between foveal and peripheral regions can be further adjusted by controlling pixel timing, namely (1) precisely managing the sequence, duration, and delivery of electrical signals (e.g., gate and source voltages) associated with peripheral and foveal regions, (2) incorporating pause periods of an appropriate length at the borders of peripheral and foveal regions, and (3) setting specific values of various pixel timing parameters such as demultiplexer on time parameter, demultiplexer dead time parameter, pixel charting time, and so forth. In aspects, another effective technique of improving visual digital content uniformity involves introducing a periodic offset or timing delay in the delivery of electrical signals, e.g., a gate voltage to a plurality of pixels in a particular row. Conventional systems and methods would deliver a gate voltage substantially simultaneously to all pixels in a particular row, which causes voltage kickback - an aggregation of voltage spikes occurring at each pixel that receives the gate voltage. Voltage kickbacks cause digital content distortions and add to content non-uniformities. Introducing periodic offsets or timing delays, as described herein, prevents such voltage spike aggregation, and as such, significantly reduces instances of content distortions.

Features from any of the examples described herein may be used in combination with one another in accordance with the general principles described herein. These and other examples, features, and advantages will be more fully understood upon reading the following detailed description in conjunction with the accompanying drawings and claims.

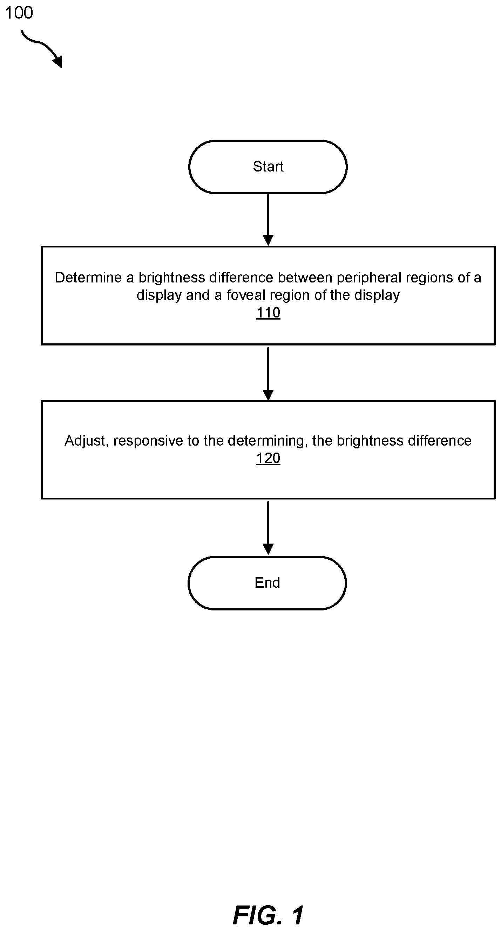

The following will provide, with reference to FIGS. 1-17, detailed descriptions of a method and a system of adjusting brightness differences between foveated digital content output on displays.

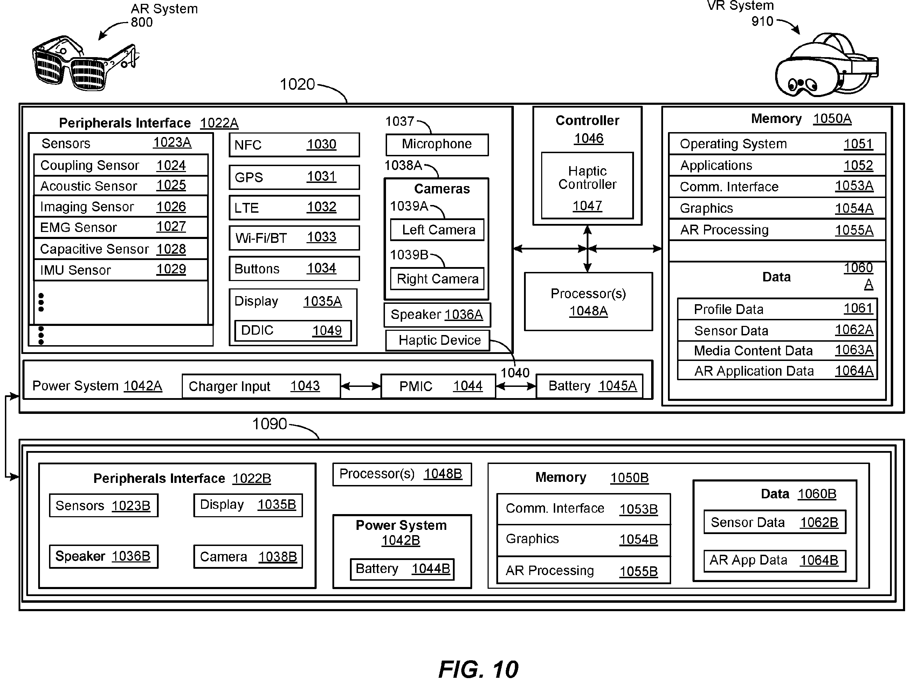

FIG. 1 is a flow diagram of an exemplary computer-implemented method 100 for adjusting a brightness difference between regions of a display that includes foveated digital content. The steps shown in FIG. 1 may be performed by any suitable computer-executable code and/or computing system, including the system(s) illustrated in FIG. 10. In one example, each of the steps shown in FIG. 1 may represent an algorithm whose structure includes and/or is represented by multiple sub-steps, examples of which will be provided in greater detail below.

As illustrated in FIG. 1, at step 110, one or more of the systems described herein may determine a brightness difference between peripheral regions of a display and a foveal region of the display. In aspects, peripheral regions may include low resolution digital content while foveal regions may include high resolution digital content. The foveal region may include content having a higher luminance or which may appear brighter to a viewer as compared to a peripheral region, which may include digital content having a lower resolution or lower luminance as compared to the foveal region. Further, in aspects, a top boundary of the foveal region may be contiguous with a boundary of one of the peripheral regions and a bottom boundary of the foveal region may be contiguous with a boundary of an additional one of the peripheral regions.

At step 120 one or more of the systems described herein may adjust the brightness difference between foveal region and peripheral regions. For example, one or more of the systems described herein may apply a set of peripheral gamma based voltages to a plurality of pixels associated with the peripheral regions and a foveal gamma based voltages to a plurality of pixels associated with a foveal region. In aspects, the one or more systems described herein may utilize these varying gamma based voltages across the peripheral and foveal regions to control brightness differences between these regions, namely adjust the brightness differences so that digital content uniformity is improved.

In aspects, each of the peripheral gamma based source voltages and the foveal gamma based source voltages correspond to a collection of reference voltages. Each of these voltages are determined using gamma curves. For example, the foveal gamma based source voltages are determined using a gamma curve that includes digital input values and corresponding luminance values. Likewise, the peripheral region based source voltages are determined using another gamma curve - one that is less steep as compared to the gamma curve utilized to determine foveal gamma based source voltages. Additionally, in aspects, the systems described herein set a peripheral common voltage to the peripheral regions and a foveal common voltage to foveal region. Further, the systems described herein utilize both the gamma based voltages (e.g., gamma based source voltages) and the common voltages to control brightness level differences between digital content output in peripheral and foveal regions.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, in some examples, AR may also be associated with applications, products, accessories, services, or some combination thereof, that are used to, for example, create content in an artificial reality and/or are otherwise used in (e.g., to perform activities in) an artificial reality.

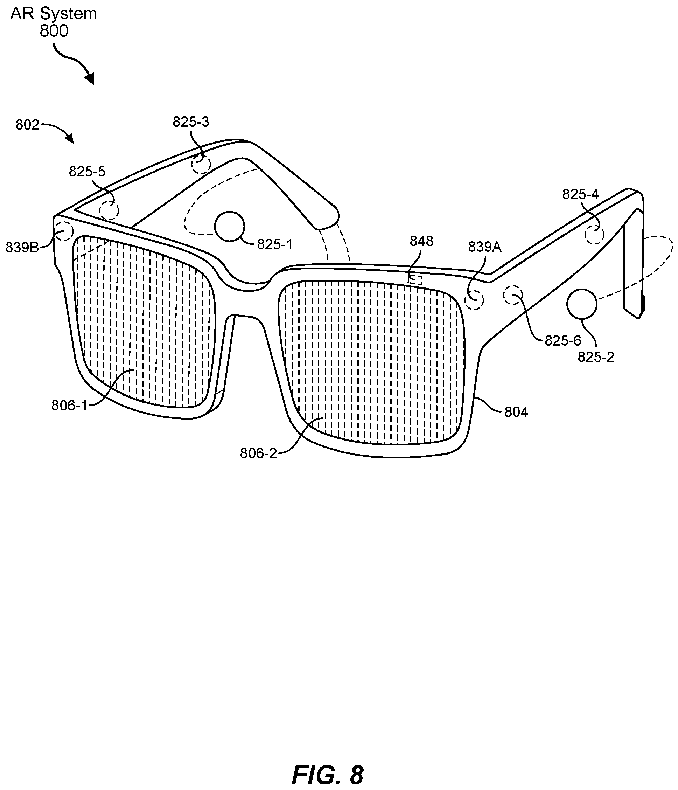

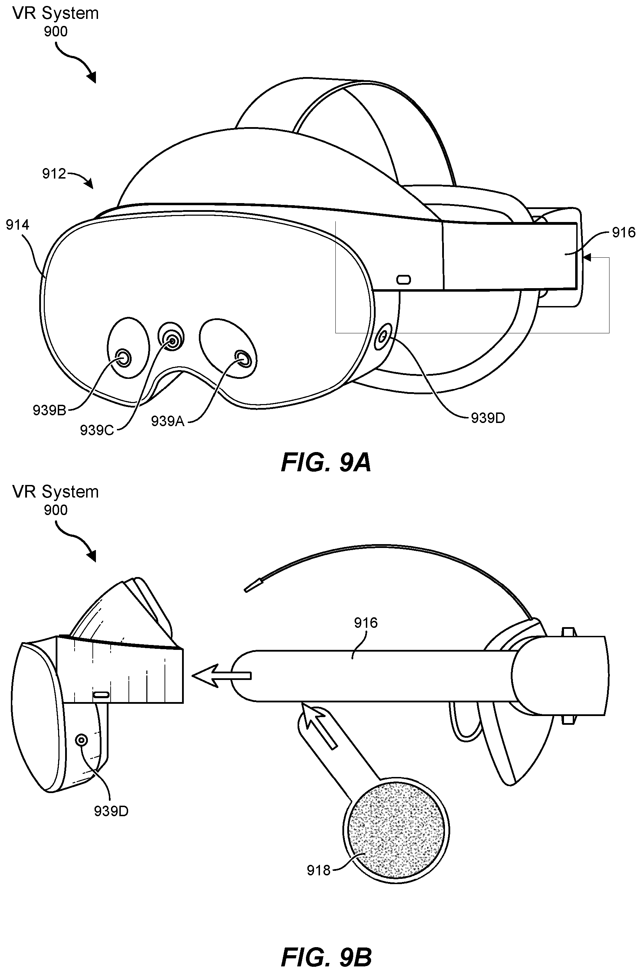

AR systems may be implemented in a variety of different form factors and configurations. Some AR systems may be designed to work without near-eye displays (NEDs). Other AR systems may include a NED that also provides visibility into the real world (such as, e.g., augmented-reality system 800 in FIG. 8) or that visually immerses a user in an artificial reality (such as, e.g., virtual-reality system 900 in FIGS. 9A and 9B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

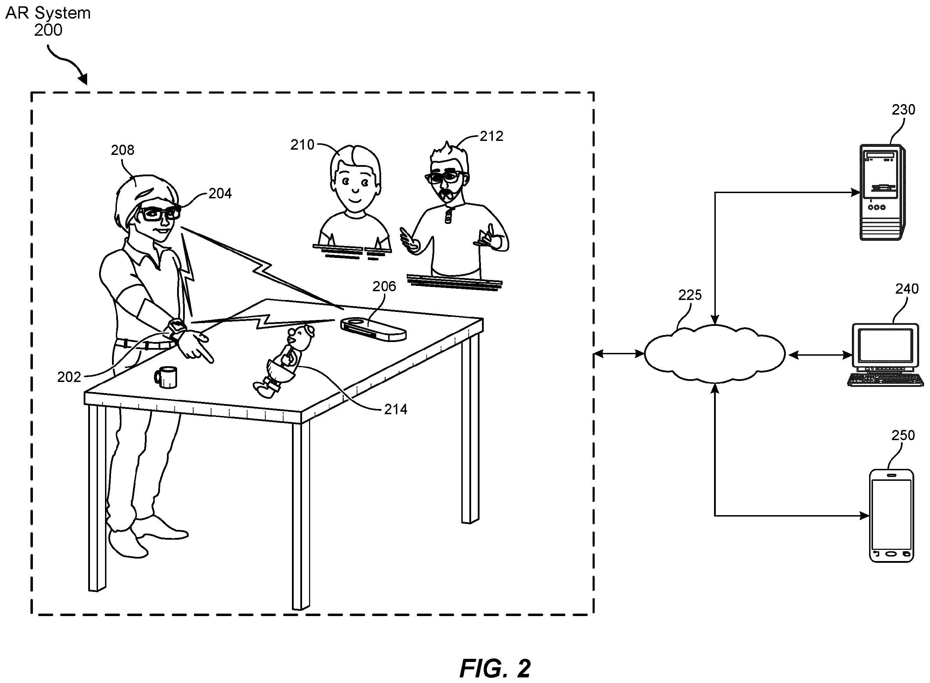

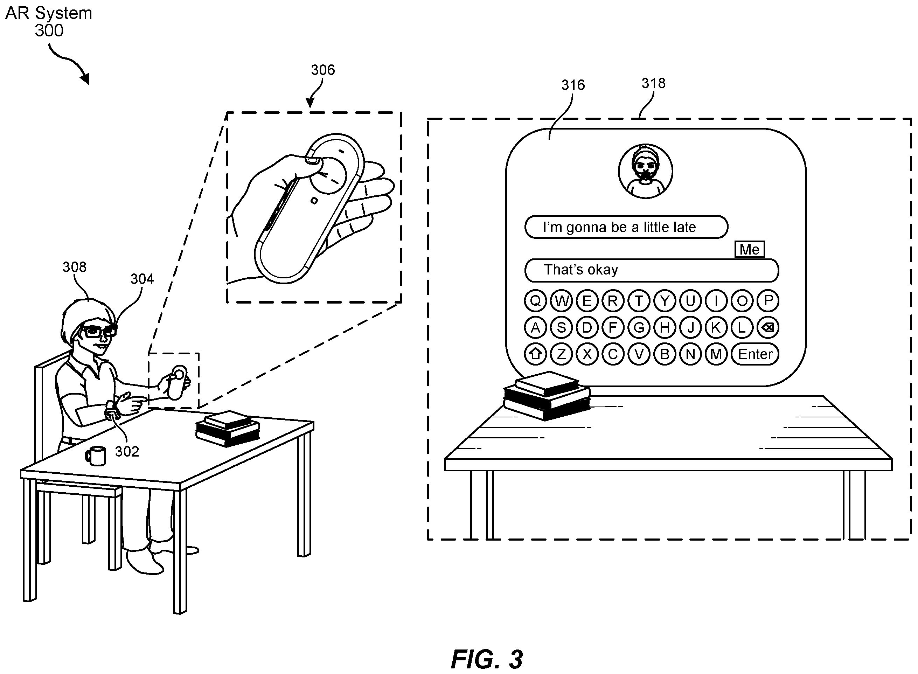

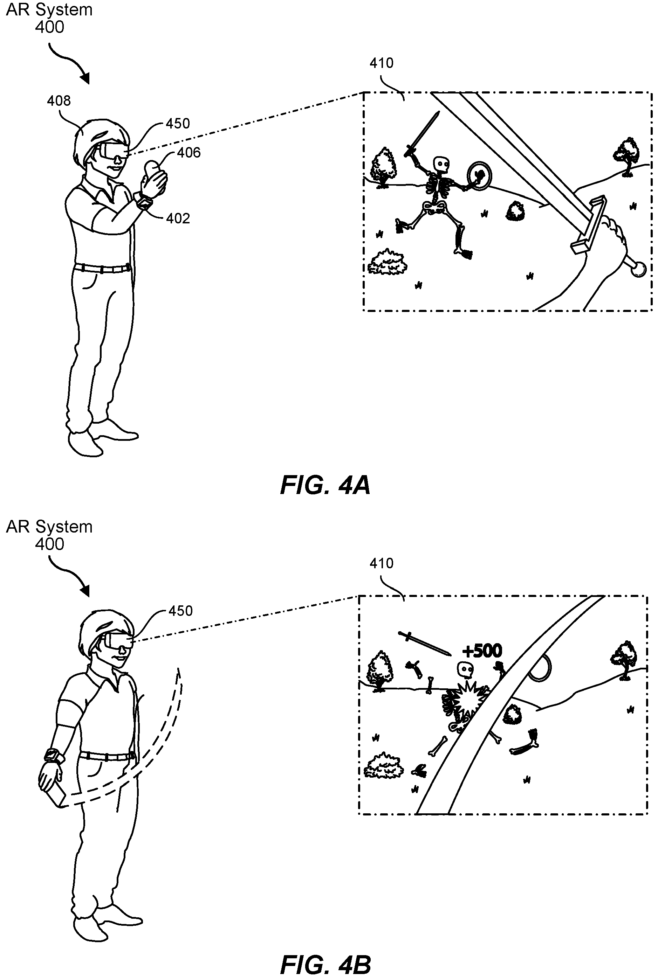

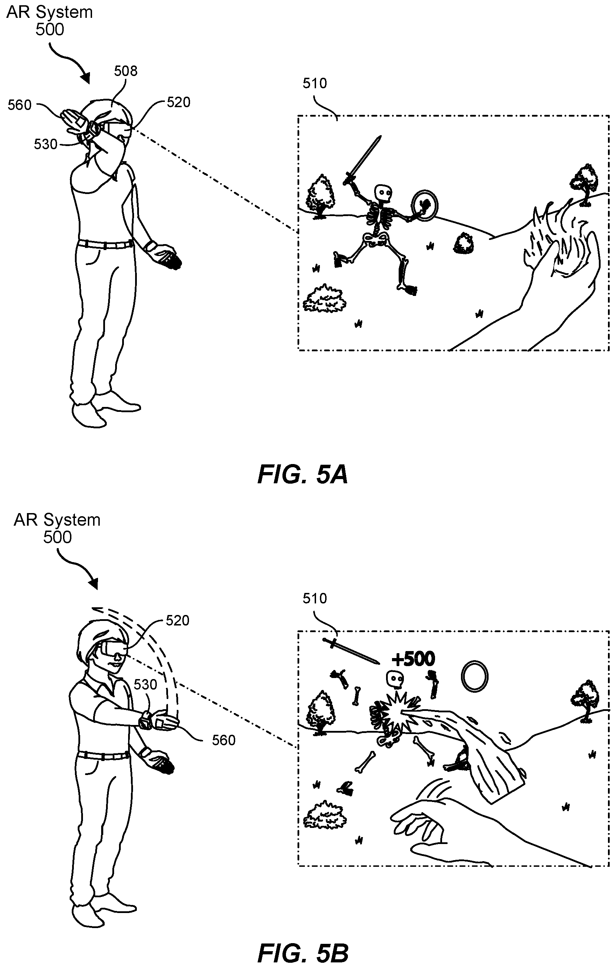

FIGS. 2-5B illustrate example artificial-reality (AR) systems. FIG. 2 shows a first AR system 200 and first example user interactions using a wrist-wearable device 202, a head-wearable device (e.g., AR glasses 800), and/or a handheld intermediary processing device (HIPD) 206. FIG. 3 shows a second AR system 300 and second example user interactions using a wrist-wearable device 302, AR glasses 304, and/or an HIPD 306. FIGS. 4A and 4B show a third AR system 400 and third example user 408 interactions using a wrist-wearable device 402, a head-wearable device (e.g., VR headset 450), and/or an HIPD 406. FIGS. 5A and 5B show a fourth AR system 500 and fourth example user 508 interactions using a wrist-wearable device 530, VR headset 520, and/or a haptic device 560 (e.g., wearable gloves).

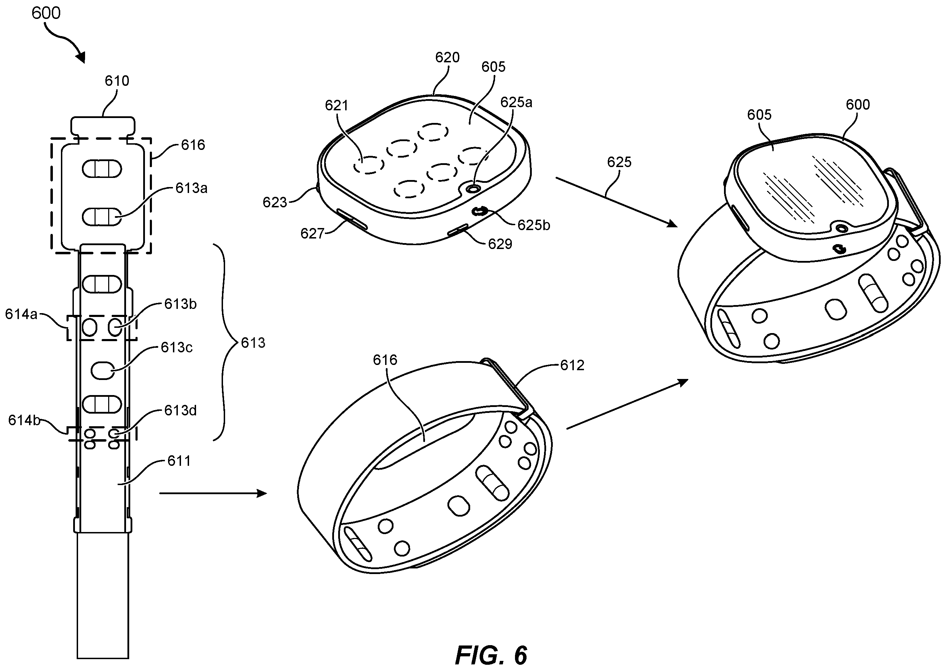

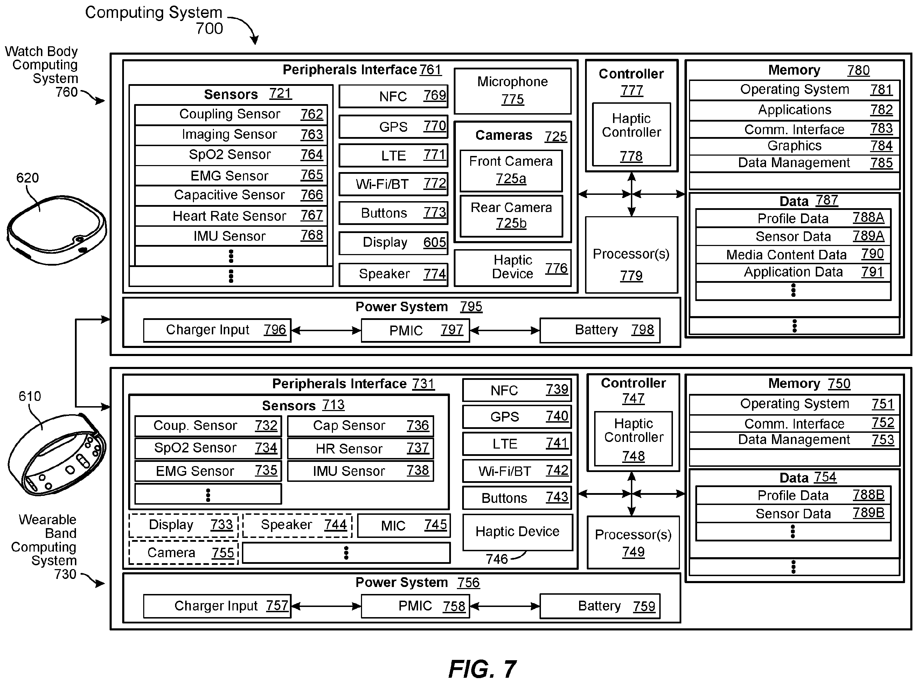

A wrist-wearable device 600, which can be used for wrist-wearable device 202, 302, 402, 530, and one or more of its components, are described below in reference to FIGS. 6 and 7; head-wearable devices 800 and 900, which can respectively be used for AR glasses 204, 304 or VR headset 450, 520, and their one or more components are described below in reference to FIGS. 8-10.

Referring to FIG. 2, wrist-wearable device 202, AR glasses 204, and/or HIPD 206 can communicatively couple via a network 225 (e.g., cellular, near field, Wi-Fi, personal area network, wireless LAN, etc.). Additionally, wrist-wearable device 202, AR glasses 204, and/or HIPD 206 can also communicatively couple with one or more servers 230, computers 240 (e.g., laptops, computers, etc.), mobile devices 250 (e.g., smartphones, tablets, etc.), and/or other electronic devices via network 225 (e.g., cellular, near field, Wi-Fi, personal area network, wireless LAN, etc.).

In FIG. 2, a user 208 is shown wearing wrist-wearable device 202 and AR glasses 204 and having HIPD 206 on their desk. The wrist-wearable device 202, AR glasses 204, and HIPD 206 facilitate user interaction with an AR environment. In particular, as shown by first AR system 200, wrist-wearable device 202, AR glasses 204, and/or HIPD 206 cause presentation of one or more avatars 210, digital representations of contacts 212, and virtual objects 214. As discussed below, user 208 can interact with one or more avatars 210, digital representations of contacts 212, and virtual objects 214 via wrist-wearable device 202, AR glasses 204, and/or HIPD 206.

User 208 can use any of wrist-wearable device 202, AR glasses 204, and/or HIPD 206 to provide user inputs. For example, user 208 can perform one or more hand gestures that are detected by wrist-wearable device 202 (e.g., using one or more EMG sensors and/or IMUs, described below in reference to FIGS. 6 and 7) and/or AR glasses 204 (e.g., using one or more image sensor or camera, described below in reference to FIGS. 8-10) to provide a user input. Alternatively, or additionally, user 208 can provide a user input via one or more touch surfaces of wrist-wearable device 202, AR glasses 204, HIPD 206, and/or voice commands captured by a microphone of wrist-wearable device 202, AR glasses 204, and/or HIPD 206. In some examples, wrist-wearable device 202, AR glasses 204, and/or HIPD 206 include a digital assistant to help user 208 in providing a user input (e.g., completing a sequence of operations, suggesting different operations or commands, providing reminders, confirming a command, etc.). In some examples, user 208 can provide a user input via one or more facial gestures and/or facial expressions. For example, cameras of wrist-wearable device 202, AR glasses 204, and/or HIPD 206 can track eyes of user 208 for navigating a user interface.

Wrist-wearable device 202, AR glasses 204, and/or HIPD 206 can operate alone or in conjunction to allow user 208 to interact with the AR environment. In some examples, HIPD 206 is configured to operate as a central hub or control center for the wrist-wearable device 202, AR glasses 204, and/or another communicatively coupled device. For example, user 208 can provide an input to interact with the AR environment at any of wrist-wearable device 202, AR glasses 204, and/or HIPD 206, and HIPD 206 can identify one or more back-end and front-end tasks to cause the performance of the requested interaction and distribute instructions to cause the performance of the one or more back-end and front-end tasks at wrist-wearable device 202, AR glasses 204, and/or HIPD 206. In some examples, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). HIPD 206 can perform the back-end tasks and provide wrist-wearable device 202 and/or AR glasses 204 operational data corresponding to the performed back-end tasks such that wrist-wearable device 202 and/or AR glasses 204 can perform the front-end tasks. In this way, HIPD 206, which has more computational resources and greater thermal headroom than wrist-wearable device 202 and/or AR glasses 204, performs computationally intensive tasks and reduces the computer resource utilization and/or power usage of wrist-wearable device 202 and/or AR glasses 204.

In the example shown by first AR system 200, HIPD 206 identifies one or more back-end tasks and front-end tasks associated with a user request to initiate an AR video call with one or more other users (represented by avatar 210 and the digital representation of contact 212) and distributes instructions to cause the performance of the one or more back-end tasks and front-end tasks. In particular, HIPD 206 performs back-end tasks for processing and/or rendering image data (and other data) associated with the AR video call and provides operational data associated with the performed back-end tasks to AR glasses 204 such that the AR glasses 204 perform front-end tasks for presenting the AR video call (e.g., presenting avatar 210 and digital representation of contact 212).

In some examples, HIPD 206 can operate as a focal or anchor point for causing the presentation of information. This allows user 208 to be generally aware of where information is presented. For example, as shown in first AR system 200, avatar 210 and the digital representation of contact 212 are presented above HIPD 206. In particular, HIPD 206 and AR glasses 204 operate in conjunction to determine a location for presenting avatar 210 and the digital representation of contact 212. In some examples, information can be presented a predetermined distance from HIPD 206 (e.g., within 5 meters). For example, as shown in first AR system 200, virtual object 214 is presented on the desk some distance from HIPD 206. Similar to the above example, HIPD 206 and AR glasses 204 can operate in conjunction to determine a location for presenting virtual object 214. Alternatively, In some examples, presentation of information is not bound by HIPD 206. More specifically, avatar 210, digital representation of contact 212, and virtual object 214 do not have to be presented within a predetermined distance of HIPD 206.

User inputs provided at wrist-wearable device 202, AR glasses 204, and/or HIPD 206 are coordinated such that the user can use any device to initiate, continue, and/or complete an operation. For example, user 208 can provide a user input to AR glasses 204 to cause AR glasses 204 to present virtual object 214 and, while virtual object 214 is presented by AR glasses 204, user 208 can provide one or more hand gestures via wrist-wearable device 202 to interact and/or manipulate virtual object 214.

FIG. 3 shows a user 308 wearing a wrist-wearable device 302 and AR glasses 304, and holding an HIPD 306. In second AR system 300, the wrist-wearable device 302, AR glasses 304, and/or HIPD 306 are used to receive and/or provide one or more messages to a contact of user 308. In particular, wrist-wearable device 302, AR glasses 304, and/or HIPD 306 detect and coordinate one or more user inputs to initiate a messaging application and prepare a response to a received message via the messaging application.

In some examples, user 308 initiates, via a user input, an application on wrist-wearable device 302, AR glasses 304, and/or HIPD 306 that causes the application to initiate on at least one device. For example, in second AR system 300, user 308 performs a hand gesture associated with a command for initiating a messaging application (represented by messaging user interface 316), wrist-wearable device 302 detects the hand gesture and, based on a determination that user 308 is wearing AR glasses 304, causes AR glasses 304 to present a messaging user interface 316 of the messaging application. AR glasses 304 can present messaging user interface 316 to user 308 via its display (e.g., as shown by a field of view 318 of user 308). In some examples, the application is initiated and executed on the device (e.g., wrist-wearable device 302, AR glasses 304, and/or HIPD 306) that detects the user input to initiate the application, and the device provides another device operational data to cause the presentation of the messaging application. For example, wrist-wearable device 302 can detect the user input to initiate a messaging application, initiate and run the messaging application, and provide operational data to AR glasses 304 and/or HIPD 306 to cause presentation of the messaging application. Alternatively, the application can be initiated and executed at a device other than the device that detected the user input. For example, wrist-wearable device 302 can detect the hand gesture associated with initiating the messaging application and cause HIPD 306 to run the messaging application and coordinate the presentation of the messaging application.

Further, user 308 can provide a user input provided at wrist-wearable device 302, AR glasses 304, and/or HIPD 306 to continue and/or complete an operation initiated at another device. For example, after initiating the messaging application via wrist-wearable device 302 and while AR glasses 304 present messaging user interface 316, user 308 can provide an input at HIPD 306 to prepare a response (e.g., shown by the swipe gesture performed on HIPD 306). Gestures performed by user 308 on HIPD 306 can be provided and/or displayed on another device. For example, a swipe gestured performed on HIPD 306 is displayed on a virtual keyboard of messaging user interface 316 displayed by AR glasses 304.

In some examples, wrist-wearable device 302, AR glasses 304, HIPD 306, and/or any other communicatively coupled device can present one or more notifications to user 308. The notification can be an indication of a new message, an incoming call, an application update, a status update, etc. User 308 can select the notification via wrist-wearable device 302, AR glasses 304, and/or HIPD 306 and can cause presentation of an application or operation associated with the notification on at least one device. For example, user 308 can receive a notification that a message was received at wrist-wearable device 302, AR glasses 304, HIPD 306, and/or any other communicatively coupled device and can then provide a user input at wrist-wearable device 302, AR glasses 304, and/or HIPD 306 to review the notification, and the device detecting the user input can cause an application associated with the notification to be initiated and/or presented at wrist-wearable device 302, AR glasses 304, and/or HIPD 306.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 304 can present to user 308 game application data, and HIPD 306 can be used as a controller to provide inputs to the game. Similarly, user 308 can use wrist-wearable device 302 to initiate a camera of AR glasses 304, and user 308 can use wrist-wearable device 302, AR glasses 304, and/or HIPD 306 to manipulate the image capture (e.g., zoom in or out, apply filters, etc.) and capture image data.

Users may interact with the devices disclosed herein in a variety of ways. For example, as shown in FIGS. 4A and 4B, a user 408 may interact with an AR system 400 by donning a VR headset 450 while holding HIPD 406 and wearing wrist-wearable device 402. In this example, AR system 400 may enable a user to interact with a game 410 by swiping their arm. One or more of VR headset 450, HIPD 406, and wrist-wearable device 402 may detect this gesture and, in response, may display a sword strike in game 410. Similarly, in FIGS. 5A and 5B, a user 508 may interact with an AR system 500 by donning a VR headset 520 while wearing haptic device 560 and wrist-wearable device 530. In this example, AR system 500 may enable a user to interact with a game 510 by swiping their arm. One or more of VR headset 520, haptic device 560, and wrist-wearable device 530 may detect this gesture and, in response, may display a spell being cast in game 410.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some examples discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. In some examples, examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by examples described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various examples described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configured to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars. (vii) clocks, and (viii) communication interface modules for enabling wired and/or wireless connections between different respective electronic devices (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some examples, a communication interface can refer to a software layer that enables different software programs to communicate with each other (e.g., application programming interfaces (APIs), protocols like HTTP and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 6 and 7 illustrate an example wrist-wearable device 600 and an example computer system 700, in accordance with some examples. Wrist-wearable device 600 is an instance of wearable device 202 described in FIG. 2 herein, such that the wearable device 202 should be understood to have the features of the wrist-wearable device 600 and vice versa. FIG. 7 illustrates components of the wrist-wearable device 600, which can be used individually or in combination, including combinations that include other electronic devices and/or electronic components.

FIG. 6 shows a wearable band 610 and a watch body 620 (or capsule) being coupled, as discussed below, to form wrist-wearable device 600. Wrist-wearable device 600 can perform various functions and/or operations associated with navigating through user interfaces and selectively opening applications as well as the functions and/or operations described above with reference to FIGS. 2-5B.

As will be described in more detail below, operations executed by wrist-wearable device 600 can include (i) presenting content to a user (e.g., displaying visual content via a display 605), (ii) detecting (e.g., sensing) user input (e.g., sensing a touch on peripheral button 623 and/or at a touch screen of the display 605, a hand gesture detected by sensors (e.g., biopotential sensors)), (iii) sensing biometric data (e.g., neuromuscular signals, heart rate, temperature, sleep, etc.) via one or more sensors 613, messaging (e.g., text, speech, video, etc.); image capture via one or more imaging devices or cameras 625, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 620, independently in wearable band 610, and/or via an electronic communication between watch body 620 and wearable band 610. In some examples, functions can be executed on wrist-wearable device 600 while an AR environment is being presented (e.g., via one of AR systems 200 to 500). The wearable devices described herein can also be used with other types of AR environments.

Wearable band 610 can be configured to be worn by a user such that an inner surface of a wearable structure 611 of wearable band 610 is in contact with the user's skin. In this example, when worn by a user, sensors 613 may contact the user's skin. In some examples, one or more of sensors 613 can sense biometric data such as a user's heart rate, a saturated oxygen level, temperature, sweat level, neuromuscular signals, or a combination thereof. One or more of sensors 613 can also sense data about a user's environment including a user's motion, altitude, location, orientation, gait, acceleration, position, or a combination thereof. In some example, one or more of sensors 613 can be configured to track a position and/or motion of wearable band 610. One or more of sensors 613 can include any of the sensors defined above and/or discussed below with respect to FIG. 6.

One or more of sensors 613 can be distributed on an inside and/or an outside surface of wearable band 610. In some examples, one or more of sensors 613 are uniformly spaced along wearable band 610. Alternatively, In some examples, one or more of sensors 613 are positioned at distinct points along wearable band 610. As shown in FIG. 6, one or more of sensors 613 can be the same or distinct. For example, In some examples, one or more of sensors 613 can be shaped as a pill (e.g., sensor 613a), an oval, a circle a square, an oblong (e.g., sensor 613c) and/or any other shape that maintains contact with the user's skin (e.g., such that neuromuscular signal and/or other biometric data can be accurately measured at the user's skin). In some examples, one or more sensors of 613 are aligned to form pairs of sensors (e.g., for sensing neuromuscular signals based on differential sensing within each respective sensor). For example, sensor 613b may be aligned with an adjacent sensor to form sensor pair 614a and sensor 613d may be aligned with an adjacent sensor to form sensor pair 614b. In some examples, wearable band 610 does not have a sensor pair. Alternatively, In some examples, wearable band 610 has a predetermined number of sensor pairs (one pair of sensors, three pairs of sensors, four pairs of sensors, six pairs of sensors, sixteen pairs of sensors, etc.).

Wearable band 610 can include any suitable number of sensors 613. In some examples, the number and arrangement of sensors 613 depends on the particular application for which wearable band 610 is used. For instance, wearable band 610 can be configured as an armband, wristband, or chest-band that include a plurality of sensors 613 with different number of sensors 613, a variety of types of individual sensors with the plurality of sensors 613, and different arrangements for each use case, such as medical use cases as compared to gaming or general day-to-day use cases.

In accordance with some examples, wearable band 610 further includes an electrical ground electrode and a shielding electrode. The electrical ground and shielding electrodes, like the sensors 613, can be distributed on the inside surface of the wearable band 610 such that they contact a portion of the user's skin. For example, the electrical ground and shielding electrodes can be at an inside surface of a coupling mechanism 616 or an inside surface of a wearable structure 611. The electrical ground and shielding electrodes can be formed and/or use the same components as sensors 613. In some examples, wearable band 610 includes more than one electrical ground electrode and more than one shielding electrode.

Sensors 613 can be formed as part of wearable structure 611 of wearable band 610. In some examples, sensors 613 are flush or substantially flush with wearable structure 611 such that they do not extend beyond the surface of wearable structure 611. While flush with wearable structure 611, sensors 613 are still configured to contact the user's skin (e.g., via a skin-contacting surface). Alternatively, In some examples, sensors 613 extend beyond wearable structure 611 a predetermined distance (e.g., 0.1 - 2 mm) to make contact and depress into the user's skin. In some examples, sensors 613 are coupled to an actuator (not shown) configured to adjust an extension height (e.g., a distance from the surface of wearable structure 611) of sensors 613 such that sensors 613 make contact and depress into the user's skin. In some examples, the actuators adjust the extension height between 0.01 mm - 1.2 mm. This may allow a the user to customize the positioning of sensors 613 to improve the overall comfort of the wearable band 610 when worn while still allowing sensors 613 to contact the user's skin. In some examples, sensors 613 are indistinguishable from wearable structure 611 when worn by the user.

Wearable structure 611 can be formed of an elastic material, elastomers, etc., configured to be stretched and fitted to be worn by the user. In some examples, wearable structure 611 is a textile or woven fabric. As described above, sensors 613 can be formed as part of a wearable structure 611. For example, sensors 613 can be molded into the wearable structure 611, be integrated into a woven fabric (e.g., sensors 613 can be sewn into the fabric and mimic the pliability of fabric and can and/or be constructed from a series woven strands of fabric).

Wearable structure 611 can include flexible electronic connectors that interconnect sensors 613, the electronic circuitry, and/or other electronic components (described below in reference to FIG. 7) that are enclosed in wearable band 610. In some examples, the flexible electronic connectors are configured to interconnect sensors 613, the electronic circuitry, and/or other electronic components of wearable band 610 with respective sensors and/or other electronic components of another electronic device (e.g., watch body 620). The flexible electronic connectors are configured to move with wearable structure 611 such that the user adjustment to wearable structure 611 (e.g., resizing, pulling, folding, etc.) does not stress or strain the electrical coupling of components of wearable band 610.

As described above, wearable band 610 is configured to be worn by a user. In particular, wearable band 610 can be shaped or otherwise manipulated to be worn by a user. For example, wearable band 610 can be shaped to have a substantially circular shape such that it can be configured to be worn on the user's lower arm or wrist. Alternatively, wearable band 610 can be shaped to be worn on another body part of the user, such as the user's upper arm (e.g., around a bicep), forearm, chest, legs, etc. Wearable band 610 can include a retaining mechanism 612 (e.g., a buckle, a hook and loop fastener, etc.) for securing wearable band 610 to the user's wrist or other body part. While wearable band 610 is worn by the user, sensors 613 sense data (referred to as sensor data) from the user's skin. In some examples, sensors 613 of wearable band 610 obtain (e.g., sense and record) neuromuscular signals.

The sensed data (e.g., sensed neuromuscular signals) can be used to detect and/or determine the user's intention to perform certain motor actions. In some examples, sensors 613 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 605 of wrist-wearable device 600 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 613 can be used to provide a user with an enhanced interaction with a physical object (e.g., devices communicatively coupled with wearable band 610) and/or a virtual object in an artificial-reality application generated by an artificial-reality system (e.g., user interface objects presented on the display 605, or another computing device (e.g., a smartphone)).

In some examples, wearable band 610 includes one or more haptic devices 746 (e.g., a vibratory haptic actuator) that are configured to provide haptic feedback (e.g., a cutaneous and/or kinesthetic sensation, etc.) to the user's skin. Sensors 613 and/or haptic devices 746 (shown in FIG. 7) can be configured to operate in conjunction with multiple applications including, without limitation, health monitoring, social media, games, and artificial reality (e.g., the applications associated with artificial reality).

Wearable band 610 can also include coupling mechanism 616 for detachably coupling a capsule (e.g., a computing unit) or watch body 620 (via a coupling surface of the watch body 620) to wearable band 610. For example, a cradle or a shape of coupling mechanism 616 can correspond to shape of watch body 620 of wrist-wearable device 600. In particular, coupling mechanism 616 can be configured to receive a coupling surface proximate to the bottom side of watch body 620 (e.g., a side opposite to a front side of watch body 620 where display 605 is located), such that a user can push watch body 620 downward into coupling mechanism 616 to attach watch body 620 to coupling mechanism 616. In some examples, coupling mechanism 616 can be configured to receive a top side of the watch body 620 (e.g., a side proximate to the front side of watch body 620 where display 605 is located) that is pushed upward into the cradle, as opposed to being pushed downward into coupling mechanism 616. In some examples, coupling mechanism 616 is an integrated component of wearable band 610 such that wearable band 610 and coupling mechanism 616 are a single unitary structure. In some examples, coupling mechanism 616 is a type of frame or shell that allows watch body 620 coupling surface to be retained within or on wearable band 610 coupling mechanism 616 (e.g., a cradle, a tracker band, a support base, a clasp, etc.).

Coupling mechanism 616 can allow for watch body 620 to be detachably coupled to the wearable band 610 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 620 to wearable band 610 and to decouple the watch body 620 from the wearable band 610. For example, a user can twist, slide, turn, push, pull, or rotate watch body 620 relative to wearable band 610, or a combination thereof, to attach watch body 620 to wearable band 610 and to detach watch body 620 from wearable band 610. Alternatively, as discussed below, In some examples, the watch body 620 can be decoupled from the wearable band 610 by actuation of a release mechanism 629.

Wearable band 610 can be coupled with watch body 620 to increase the functionality of wearable band 610 (e.g., converting wearable band 610 into wrist-wearable device 600, adding an additional computing unit and/or battery to increase computational resources and/or a battery life of wearable band 610, adding additional sensors to improve sensed data, etc.). As described above, wearable band 610 and coupling mechanism 616 are configured to operate independently (e.g., execute functions independently) from watch body 620. For example, coupling mechanism 616 can include one or more sensors 613 that contact a user's skin when wearable band 610 is worn by the user, with or without watch body 620 and can provide sensor data for determining control commands.

A user can detach watch body 620 from wearable band 610 to reduce the encumbrance of wrist-wearable device 600 to the user. For examples in which watch body 620 is removable, watch body 620 can be referred to as a removable structure, such that in these examples wrist-wearable device 600 includes a wearable portion (e.g., wearable band 610) and a removable structure (e.g., watch body 620).

Turning to watch body 620, in some examples watch body 620 can have a substantially rectangular or circular shape. Watch body 620 is configured to be worn by the user on their wrist or on another body part. More specifically, watch body 620 is sized to be easily carried by the user, attached on a portion of the user's clothing, and/or coupled to wearable band 610 (forming the wrist-wearable device 600). As described above, watch body 620 can have a shape corresponding to coupling mechanism 616 of wearable band 610. In some examples, watch body 620 includes a single release mechanism 629 or multiple release mechanisms (e.g., two release mechanisms 629 positioned on opposing sides of watch body 620, such as spring-loaded buttons) for decoupling watch body 620 from wearable band 610. Release mechanism 629 can include, without limitation, a button, a knob, a plunger, a handle, a lever, a fastener, a clasp, a dial, a latch, or a combination thereof.

A user can actuate release mechanism 629 by pushing, turning, lifting, depressing, shifting, or performing other actions on release mechanism 629. Actuation of release mechanism 629 can release (e.g., decouple) watch body 620 from coupling mechanism 616 of wearable band 610, allowing the user to use watch body 620 independently from wearable band 610 and vice versa. For example, decoupling watch body 620 from wearable band 610 can allow a user to capture images using rear-facing camera 625b. Although release mechanism 629 is shown positioned at a corner of watch body 620, release mechanism 629 can be positioned anywhere on watch body 620 that is convenient for the user to actuate. In addition, In some examples, wearable band 610 can also include a respective release mechanism for decoupling watch body 620 from coupling mechanism 616. In some examples, release mechanism 629 is optional and watch body 620 can be decoupled from coupling mechanism 616 as described above (e.g., via twisting, rotating, etc.).

Watch body 620 can include one or more peripheral buttons 623 and 627 for performing various operations at watch body 620. For example, peripheral buttons 623 and 627 can be used to turn on or wake (e.g., transition from a sleep state to an active state) display 605, unlock watch body 620, increase or decrease a volume, increase or decrease a brightness, interact with one or more applications, interact with one or more user interfaces, etc. Additionally or alternatively, In some examples, display 605 operates as a touch screen and allows the user to provide one or more inputs for interacting with watch body 620.

In some examples, watch body 620 includes one or more sensors 621. Sensors 621 of watch body 620 can be the same or distinct from sensors 613 of wearable band 610. Sensors 621 of watch body 620 can be distributed on an inside and/or an outside surface of watch body 620. In some examples, sensors 621 are configured to contact a user's skin when watch body 620 is worn by the user. For example, sensors 621 can be placed on the bottom side of watch body 620 and coupling mechanism 616 can be a cradle with an opening that allows the bottom side of watch body 620 to directly contact the user's skin. Alternatively, In some examples, watch body 620 does not include sensors that are configured to contact the user's skin (e.g., including sensors internal and/or external to the watch body 620 that are configured to sense data of watch body 620 and the surrounding environment). In some examples, sensors 621 are configured to track a position and/or motion of watch body 620.

Watch body 620 and wearable band 610 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 620 and wearable band 610 can share data sensed by sensors 613 and 621, as well as application and device specific information (e.g., active and/or available applications, output devices (e.g.,

displays, speakers, etc.), input devices (e.g., touch screens, microphones, imaging sensors, etc.).

In some examples, watch body 620 can include, without limitation, a front-facing camera 625a and/or a rear-facing camera 625b, sensors 621 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 763), a touch sensor, a sweat sensor, etc.). In some examples, watch body 620 can include one or more haptic devices 776 (e.g., a vibratory haptic actuator) that is configured to provide haptic feedback (e.g., a cutaneous and/or kinesthetic sensation, etc.) to the user. Sensors 721 and/or haptic device 776 can also be configured to operate in conjunction with multiple applications including, without limitation, health monitoring applications, social media applications, game applications, and artificial reality applications (e.g., the applications associated with artificial reality).

As described above, watch body 620 and wearable band 610, when coupled, can form wrist-wearable device 600. When coupled, watch body 620 and wearable band 610 may operate as a single device to execute functions (operations, detections, communications, etc.) described herein. In some examples, each device may be provided with particular instructions for performing the one or more operations of wrist-wearable device 600. For example, in accordance with a determination that watch body 620 does not include neuromuscular signal sensors, wearable band 610 can include alternative instructions for performing associated instructions (e.g., providing sensed neuromuscular signal data to watch body 620 via a different electronic device). Operations of wrist-wearable device 600 can be performed by watch body 620 alone or in conjunction with wearable band 610 (e.g., via respective processors and/or hardware components) and vice versa. In some examples, operations of wrist-wearable device 600, watch body 620, and/or wearable band 610 can be performed in conjunction with one or more processors and/or hardware components.

As described below with reference to the block diagram of FIG. 7, wearable band 610 and/or watch body 620 can each include independent resources required to independently execute functions. For example, wearable band 610 and/or watch body 620 can each include a power source (e.g., a battery), a memory, data storage, a processor (e.g., a central processing unit (CPU)), communications, a light source, and/or input/output devices.

FIG. 7 shows block diagrams of a computing system 730 corresponding to wearable band 610 and a computing system 760 corresponding to watch body 620 according to some examples. Computing system 700 of wrist-wearable device 600 may include a combination of components of wearable band computing system 730 and watch body computing system 760, in accordance with some examples.

Watch body 620 and/or wearable band 610 can include one or more components shown in watch body computing system 760. In some examples, a single integrated circuit may include all or a substantial portion of the components of watch body computing system 760 included in a single integrated circuit. Alternatively, In some examples, components of the watch body computing system 760 may be included in a plurality of integrated circuits that are communicatively coupled. In some examples, watch body computing system 760 may be configured to couple (e.g., via a wired or wireless connection) with wearable band computing system 730, which may allow the computing systems to share components, distribute tasks, and/or perform other operations described herein (individually or as a single device).

Watch body computing system 760 can include one or more processors 779, a controller 777, a peripherals interface 761, a power system 795, and memory (e.g., a memory 780).

Power system 795 can include a charger input 796, a power-management integrated circuit (PMIC) 797, and a battery 798. In some examples, a watch body 620 and a wearable band 610 can have respective batteries (e.g., battery 798 and 759) and can share power with each other. Watch body 620 and wearable band 610 can receive a charge using a variety of techniques. In some examples, watch body 620 and wearable band 610 can use a wired charging assembly (e.g., power cords) to receive the charge. Alternatively, or in addition, watch body 620 and/or wearable band 610 can be configured for wireless charging. For example, a portable charging device can be designed to mate with a portion of watch body 620 and/or wearable band 610 and wirelessly deliver usable power to battery 798 of watch body 620 and/or battery 759 of wearable band 610. Watch body 620 and wearable band 610 can have independent power systems (e.g., power system 795 and 756, respectively) to enable each to operate independently. Watch body 620 and wearable band 610 can also share power (e.g., one can charge the other) via respective PMICs (e.g., PMICs 797 and 758) and charger inputs (e.g., 757 and 796) that can share power over power and ground conductors and/or over wireless charging antennas.

In some examples, peripherals interface 761 can include one or more sensors 721. Sensors 721 can include one or more coupling sensors 762 for detecting when watch body 620 is coupled with another electronic device (e.g., a wearable band 610). Sensors 721 can include one or more imaging sensors 763 (e.g., one or more of cameras 725, and/or separate imaging sensors 763 (e.g., thermal-imaging sensors)). In some examples, sensors 721 can include one or more SpO2 sensors 764. In some examples, sensors 721 can include one or more biopotential-signal sensors (e.g., EMG sensors 765, which may be disposed on an interior, user-facing portion of watch body 620 and/or wearable band 610). In some examples, sensors 721 may include one or more capacitive sensors 766. In some examples, sensors 721 may include one or more heart rate sensors 767. In some examples, sensors 721 may include one or more IMU sensors 768. In some examples, one or more IMU sensors 768 can be configured to detect movement of a user's hand or other location where watch body 620 is placed or held.

In some examples, one or more of sensors 721 may provide an example human-machine interface. For example, a set of neuromuscular sensors, such as EMG sensors 765, may be arranged circumferentially around wearable band 610 with an interior surface of EMG sensors 765 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 610 can be used to generate control information for controlling an augmented reality system, a robot, controlling a vehicle, scrolling through text, controlling a virtual avatar, or any other suitable control task.

In some examples, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other examples, at least some signal processing of the output of the sensing components can be performed in software such as processors 779. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 765 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the examples described herein can also be implemented in wearable interfaces with other types of sensors including, but not limited to, mechanomyography (MMG) sensors, sonomyography (SMG) sensors, and electrical impedance tomography (EIT) sensors.

In some examples, peripherals interface 761 includes a near-field communication (NFC) component 769, a global-position system (GPS) component 770, a long-term evolution (LTE) component 771, and/or a Wi-Fi and/or Bluetooth communication component 772. In some examples, peripherals interface 761 includes one or more buttons 773 (e.g., peripheral buttons 623 and 627 in FIG. 6), which, when selected by a user, cause operation to be performed at watch body 620. In some examples, the peripherals interface 761 includes one or more indicators, such as a light emitting diode (LED), to provide a user with visual indicators (e.g., message received, low battery, active microphone and/or camera, etc.).

Watch body 620 can include at least one display 605 for displaying visual representations of information or data to a user, including user-interface elements and/or three-dimensional virtual objects. The display can also include a touch screen for inputting user inputs, such as touch gestures, swipe gestures, and the like. Watch body 620 can include at least one speaker 774 and at least one microphone 775 for providing audio signals to the user and receiving audio input from the user. The user can provide user inputs through microphone 775 and can also receive audio output from speaker 774 as part of a haptic event provided by haptic controller 778. Watch body 620 can include at least one camera 725, including a front camera 725a and a rear camera 725b. Cameras 725 can include ultra-wide-angle cameras, wide angle cameras, fish-eye cameras, spherical cameras, telephoto cameras, depth-sensing cameras, or other types of cameras.

Watch body computing system 760 can include one or more haptic controllers 778 and associated componentry (e.g., haptic devices 776) for providing haptic events at watch body 620 (e.g., a vibrating sensation or audio output in response to an event at the watch body 620). Haptic controllers 778 can communicate with one or more haptic devices 776, such as electroacoustic devices, including a speaker of the one or more speakers 774 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 778 can provide haptic events to that are capable of being sensed by a user of watch body 620. In some examples, one or more haptic controllers 778 can receive input signals from an application of applications 782.

In some examples, wearable band computing system 730 and/or watch body computing system 760 can include memory 780, which can be controlled by one or more memory controllers of controllers 777. In some examples, software components stored in memory 780 include one or more applications 782 configured to perform operations at the watch body 620. In some examples, one or more applications 782 may include games, word processors, messaging applications, calling applications, web browsers, social media applications, media streaming applications, financial applications, calendars, clocks, etc. In some examples, software components stored in memory 780 include one or more communication interface modules 783 as defined above. In some examples, software components stored in memory 780 include one or more graphics modules 784 for rendering, encoding, and/or decoding audio and/or visual data and one or more data management modules 785 for collecting, organizing, and/or providing access to data 787 stored in memory 780. In some examples, one or more of applications 782 and/or one or more modules can work in conjunction with one another to perform various tasks at the watch body 620.

In some examples, software components stored in memory 780 can include one or more operating systems 781 (e.g., a Linux-based operating system, an Android operating system, etc.). Memory 780 can also include data 787. Data 787 can include profile data 788A, sensor data 789A, media content data 790, and application data 791.

It should be appreciated that watch body computing system 760 is an example of a computing system within watch body 620, and that watch body 620 can have more or fewer components than shown in watch body computing system 760, can combine two or more components, and/or can have a different configuration and/or arrangement of the components. The various components shown in watch body computing system 760 are implemented in hardware, software, firmware, or a combination thereof, including one or more signal processing and/or application-specific integrated circuits.

Turning to the wearable band computing system 730, one or more components that can be included in wearable band 610 are shown. Wearable band computing system 730 can include more or fewer components than shown in watch body computing system 760, can combine two or more components, and/or can have a different configuration and/or arrangement of some or all of the components. In some examples, all, or a substantial portion of the components of wearable band computing system 730 are included in a single integrated circuit. Alternatively, In some examples, components of wearable band computing system 730 are included in a plurality of integrated circuits that are communicatively coupled. As described above, In some examples, wearable band computing system 730 is configured to couple (e.g., via a wired or wireless connection) with watch body computing system 760, which allows the computing systems to share components, distribute tasks, and/or perform other operations described herein (individually or as a single device).

Wearable band computing system 730, similar to watch body computing system 760, can include one or more processors 749, one or more controllers 747 (including one or more haptics controllers 748), a peripherals interface 731 that can includes one or more sensors 713 and other peripheral devices, a power source (e.g., a power system 756), and memory (e.g., a memory 750) that includes an operating system (e.g., an operating system 751), data (e.g., data 754 including profile data 788B, sensor data 789B, etc.), and one or more modules (e.g., a communications interface module 752, a data management module 753, etc.).

One or more of sensors 713 can be analogous to sensors 721 of watch body computing system 760. For example, sensors 713 can include one or more coupling sensors 732, one or more SpO2 sensors 734, one or more EMG sensors 735, one or more capacitive sensors 736, one or more heart rate sensors 737, and one or more IMU sensors 738.

Peripherals interface 731 can also include other components analogous to those included in peripherals interface 761 of watch body computing system 760, including an NFC component 739, a GPS component 740, an LTE component 741, a Wi-Fi and/or Bluetooth communication component 742, and/or one or more haptic devices 746 as described above in reference to peripherals interface 761. In some examples, peripherals interface 731 includes one or more buttons 743, a display 733, a speaker 744, a microphone 745, and a camera 755. In some examples, peripherals interface 731 includes one or more indicators, such as an LED.

It should be appreciated that wearable band computing system 730 is an example of a computing system within wearable band 610, and that wearable band 610 can have more or fewer components than shown in wearable band computing system 730, combine two or more components, and/or have a different configuration and/or arrangement of the components. The various components shown in wearable band computing system 730 can be implemented in one or more of a combination of hardware, software, or firmware, including one or more signal processing and/or application-specific integrated circuits.

Wrist-wearable device 600 with respect to FIG. 6 is an example of wearable band 610 and watch body 620 coupled together, so wrist-wearable device 600 will be understood to include the components shown and described for wearable band computing system 730 and watch body computing system 760. In some examples, wrist-wearable device 600 has a split architecture (e.g., a split mechanical architecture, a split electrical architecture, etc.) between watch body 620 and wearable band 610. In other words, all of the components shown in wearable band computing system 730 and watch body computing system 760 can be housed or otherwise disposed in a combined wrist-wearable device 600 or within individual components of watch body 620, wearable band 610, and/or portions thereof (e.g., a coupling mechanism 616 of wearable band 610).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some examples, wrist-wearable device 600 can be used in conjunction with a head-wearable device (e.g., AR glasses 800 and VR system 910) and/or an HIPD, and wrist-wearable device 600 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR glasses 800 and VR headset 910.

FIGS. 8 to 10 show example artificial-reality systems, which can be used as or in connection with wrist-wearable device 600. In some examples, AR system 800 includes an eyewear device 802, as shown in FIG. 8. In some examples, VR system 910 includes a head-mounted display (HMD) 912, as shown in FIGS. 9A and 9B. In some examples, AR system 800 and VR system 910 can include one or more analogous components (e.g., components for presenting interactive artificial-reality environments, such as processors, memory, and/or presentation devices, including one or more displays and/or one or more waveguides), some of which are described in more detail with respect to FIG. 10. As described herein, a head-wearable device can include components of eyewear device 802 and/or head-mounted display 912. Some examples of head-wearable devices do not include any displays, including any of the displays described with respect to AR system 800 and/or VR system 910. While the example artificial-reality systems are respectively described herein as AR system 800 and VR system 910, either or both of the example AR systems described herein can be configured to present fully-immersive virtual-reality scenes presented in substantially all of a user's field of view or subtler augmented-reality scenes that are presented within a portion, less than all, of the user's field of view.

FIG. 8 show an example visual depiction of AR system 800, including an eyewear device 802 (which may also be described herein as augmented-reality glasses, and/or smart glasses). AR system 800 can include additional electronic components that are not shown in FIG. 8, such as a wearable accessory device and/or an intermediary processing device, in electronic communication or otherwise configured to be used in conjunction with the eyewear device 802. In some examples, the wearable accessory device and/or the intermediary processing device may be configured to couple with eyewear device 802 via a coupling mechanism in electronic communication with a coupling sensor 1024 (FIG. 10), where coupling sensor 1024 can detect when an electronic device becomes physically or electronically coupled with eyewear device 802. In some examples, eyewear device 802 can be configured to couple to a housing 1090 (FIG. 10), which may include one or more additional coupling mechanisms configured to couple with additional accessory devices. The components shown in FIG. 8 can be implemented in hardware, software, firmware, or a combination thereof, including one or more signal-processing components and/or application-specific integrated circuits (ASICs).

Eyewear device 802 includes mechanical glasses components, including a frame 804 configured to hold one or more lenses (e.g., one or both lenses 806-1 and 806-2). One of ordinary skill in the art will appreciate that eyewear device 802 can include additional mechanical components, such as hinges configured to allow portions of frame 804 of eyewear device 802 to be folded and unfolded, a bridge configured to span the gap between lenses 806-1 and 806-2 and rest on the user's nose, nose pads configured to rest on the bridge of the nose and provide support for eyewear device 802, earpieces configured to rest on the user's ears and provide additional support for eyewear device 802, temple arms configured to extend from the hinges to the earpieces of eyewear device 802, and the like. One of ordinary skill in the art will further appreciate that some examples of AR system 800 can include none of the mechanical components described herein. For example, smart contact lenses configured to present artificial reality to users may not include any components of eyewear device 802.

Eyewear device 802 includes electronic components, many of which will be described in more detail below with respect to FIG. 10. Some example electronic components are illustrated in FIG. 8, including acoustic sensors 825-1, 825-2, 825-3, 825-4, 825-5, and 825-6, which can be distributed along a substantial portion of the frame 804 of eyewear device 802. Eyewear device 802 also includes a left camera 839A and a right camera 839B, which are located on different sides of the frame 804. Eyewear device 802 also includes a processor 848 (or any other suitable type or form of integrated circuit) that is embedded into a portion of the frame 804.

FIGS. 9A and 9B show a VR system 910 that includes a head-mounted display (HMD) 912 (e.g., also referred to herein as an artificial-reality headset, a head-wearable device, a VR headset, etc.), in accordance with some examples. As noted, some artificial-reality systems (e.g., AR system 800) may, instead of blending an artificial reality with actual reality, substantially replace one or more of a user's visual and/or other sensory perceptions of the real world with a virtual experience (e.g., AR systems 400 and 500).

HMD 912 includes a front body 914 and a frame 916 (e.g., a strap or band) shaped to fit around a user's head. In some examples, front body 914 and/or frame 916 include one or more electronic elements for facilitating presentation of and/or interactions with an AR and/or VR system (e.g., displays, IMUs, tracking emitter or detectors). In some examples, HMD 912 includes output audio transducers (e.g., an audio transducer 918), as shown in FIG. 9B. In some examples, one or more components, such as the output audio transducer(s) 918 and frame 916, can be configured to attach and detach (e.g., are detachably attachable) to HMD 912 (e.g., a portion or all of frame 916, and/or audio transducer 918), as shown in FIG. 9B. In some examples, coupling a detachable component to HMD 912 causes the detachable component to come into electronic communication with HMD 912.

FIGS. 9A and 9B also show that VR system 910 includes one or more cameras, such as left camera 939A and right camera 939B, which can be analogous to left and right cameras 839A and 839B on frame 804 of eyewear device 802. In some examples, VR system 910 includes one or more additional cameras (e.g., cameras 939C and 939D), which can be configured to augment image data obtained by left and right cameras 939A and 939B by providing more information. For example, camera 939C can be used to supply color information that is not discerned by cameras 939A and 939B. In some examples, one or more of cameras 939A to 939D can include an optional IR cut filter configured to remove IR light from being received at the respective camera sensors.

FIG. 10 illustrates a computing system 1020 and an optional housing 1090, each of which show components that can be included in AR system 800 and/or VR system 910. In some examples, more or fewer components can be included in optional housing 1090 depending on practical restraints of the respective AR system being described.

In some examples, computing system 1020 can include one or more peripherals interfaces 1022A and/or optional housing 1090 can include one or more peripherals interfaces 1022B. Each of computing system 1020 and optional housing 1090 can also include one or more power systems 1042A and 1042B, one or more controllers 1046 (including one or more haptic controllers 1047), one or more processors 1048A and 1048B (as defined above, including any of the examples provided), and memory 1050A and 1050B, which can all be in electronic communication with each other. For example, the one or more processors 1048A and 1048B can be configured to execute instructions stored in memory 1050A and 1050B, which can cause a controller of one or more of controllers 1046 to cause operations to be performed at one or more peripheral devices connected to peripherals interface 1022A and/or 1022B. In some examples, each operation described can be powered by electrical power provided by power system 1042A and/or 1042B.

In some examples, peripherals interface 1022A can include one or more devices configured to be part of computing system 1020, some of which have been defined above and/or described with respect to the wrist-wearable devices shown in FIGS. 6 and 7. For example, peripherals interface 1022A can include one or more sensors 1023A. Some example sensors 1023A include one or more coupling sensors 1024, one or more acoustic sensors 1025, one or more imaging sensors 1026, one or more EMG sensors 1027, one or more capacitive sensors 1028, one or more IMU sensors 1029, and/or any other types of sensors explained above or described with respect to any other examples discussed herein.

In some examples, peripherals interfaces 1022A and 1022B can include one or more additional peripheral devices, including one or more NFC devices 1030, one or more GPS devices 1031, one or more LTE devices 1032, one or more Wi-Fi and/or Bluetooth devices 1033, one or more buttons 1034 (e.g., including buttons that are slidable or otherwise adjustable), one or more displays 1035A and 1035B, one or more speakers 1036A and 1036B, one or more microphones 1037, one or more cameras 1038A and 1038B (e.g., including the left camera 1039A and/or a right camera 1039B), one or more haptic devices 1040, and/or any other types of peripheral devices defined above or described with respect to any other examples discussed herein. In aspects, each of the one or more displays 1035A and 1035B can include a display driver integrated circuit (DDIC 1049), which is operable to control the manner in which digital content is output on each display. In particular, DDIC 1049 controls the manner in which voltages are generated and delivered to various pixels of one or more displays 1035A and 1035B such that the brightness of digital content presented on these displays can be controlled and modified. In operation, the DDIC 1049 receives digital image data signals and converts these signals into voltages and various types of additional signals. These voltages and additional signals are utilized to select and active a particular combination of pixels at a particular time. Further, these voltages and signals facilitate the particular combination of pixels to output content on the displays that correspond to a particular brightness level perceived by a user to view.

AR systems can include a variety of types of visual feedback mechanisms (e.g., presentation devices). For example, display devices in AR system 800 and/or VR system 910 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some examples of AR systems also include optical subsystems having one or more lenses (e.g., conventional concave or convex lenses, Fresnel lenses, or adjustable liquid lenses) through which a user can view a display screen.

For example, respective displays 1035A and 1035B can be coupled to each of the lenses 806-1 and 806-2 of AR system 800. Displays 1035A and 1035B may be coupled to each of lenses 806-1 and 806-2, which can act together or independently to present an image or series of images to a user. In some examples, AR system 800 includes a single display 1035A or 1035B (e.g., a near-eye display) or more than two displays 1035A and 1035B. In some examples, a first set of one or more displays 1035A and 1035B can be used to present an augmented-reality environment, and a second set of one or more display devices 1035A and 1035B can be used to present a virtual-reality environment. In some examples, one or more waveguides are used in conjunction with presenting artificial-reality content to the user of AR system 800 (e.g., as a means of delivering light from one or more displays 1035A and 1035B to the user's eyes). In some examples, one or more waveguides are fully or partially integrated into the eyewear device 802. Additionally, or alternatively to display screens, some artificial-reality systems include one or more projection systems. For example, display devices in AR system 800 and/or VR system 910 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some examples, one or more waveguides are provided additionally or alternatively to the one or more display(s) 1035A and 1035B.

Computing system 1020 and/or optional housing 1090 of AR system 800 or VR system 910 can include some or all of the components of a power system 1042A and 1042B. Power systems 1042A and 1042B can include one or more charger inputs 1043, one or more PMICs 1044, and/or one or more batteries 1045A and 1044B.

Memory 1050A and 1050B may include instructions and data, some or all of which may be stored as non-transitory computer-readable storage media within the memories 1050A and 1050B. For example, memory 1050A and 1050B can include one or more operating systems 1051, one or more applications 1052, one or more communication interface applications 1053A and 1053B, one or more graphics applications 1054A and 1054B, one or more AR processing applications 1055A and 1055B, and/or any other types of data defined above or described with respect to any other examples discussed herein.

Memory 1050A and 1050B also include data 1060A and 1060B, which can be used in conjunction with one or more of the applications discussed above. Data 1060A and 1060B can include profile data 1061, sensor data 1062A and 1062B, media content data 1063A, AR application data 1064A and 1064B, and/or any other types of data defined above or described with respect to any other examples discussed herein.

In some examples, controller 1046 of eyewear device 802 may process information generated by sensors 1023A and/or 1023B on eyewear device 802 and/or another electronic device within AR system 800. For example, controller 1046 can process information from acoustic sensors 825-1 and 825-2. For each detected sound, controller 1046 can perform a direction of arrival (DOA) estimation to estimate a direction from which the detected sound arrived at eyewear device 802 of AR system 800. As one or more of acoustic sensors 1025 (e.g., the acoustic sensors 825-1, 825-2) detects sounds, controller 1046 can populate an audio data set with the information (e.g., represented in FIG. 10 as sensor data 1062A and 1062B).

In some examples, a physical electronic connector can convey information between eyewear device 802 and another electronic device and/or between one or more processors 848, 1048A, 1048B of AR system 800 or VR system 910 and controller 1046. The information can be in the form of optical data, electrical data, wireless data, or any other transmittable data form. Moving the processing of information generated by eyewear device 802 to an intermediary processing device can reduce weight and heat in the eyewear device, making it more comfortable and safer for a user. In some examples, an optional wearable accessory device (e.g., an electronic neckband) is coupled to eyewear device 802 via one or more connectors. The connectors can be wired or wireless connectors and can include electrical and/or non-electrical (e.g., structural) components. In some examples, eyewear device 802 and the wearable accessory device can operate independently without any wired or wireless connection between them.

In some situations, pairing external devices, such as an intermediary processing device (e.g., HIPD 206, 306, 406) with eyewear device 802 (e.g., as part of AR system 800) enables eyewear device 802 to achieve a similar form factor of a pair of glasses while still providing sufficient battery and computation power for expanded capabilities. Some, or all, of the battery power, computational resources, and/or additional features of AR system 800 can be provided by a paired device or shared between a paired device and eyewear device 802, thus reducing the weight, heat profile, and form factor of eyewear device 802 overall while allowing eyewear device 802 to retain its desired functionality. For example, the wearable accessory device can allow components that would otherwise be included on eyewear device 802 to be included in the wearable accessory device and/or intermediary processing device, thereby shifting a weight load from the user's head and neck to one or more other portions of the user's body. In some examples, the intermediary processing device has a larger surface area over which to diffuse and disperse heat to the ambient environment. Thus, the intermediary processing device can allow for greater battery and computation capacity than might otherwise have been possible on eyewear device 802 standing alone. Because weight carried in the wearable accessory device can be less invasive to a user than weight carried in the eyewear device 802, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 800 and/or VR system 910 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some examples, the methods described herein are used to map the real world, to provide a user with context about real-world surroundings, and/or to generate digital twins (e.g., interactable virtual objects), among a variety of other functions. For example, FIGS. 9A and 9B show VR system 910 having cameras 939A to 939D, which can be used to provide depth information for creating a voxel field and a two-dimensional mesh to provide object information to the user to avoid collisions.

In some examples, AR system 800 and/or VR system 910 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some examples of an artificial reality system, such as AR system 800 and/or VR system 910, ambient light (e.g., a live feed of the surrounding environment that a user would normally see) can be passed through a display element of a respective head-wearable device presenting aspects of the AR system. In some examples, ambient light can be passed through a portion less that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

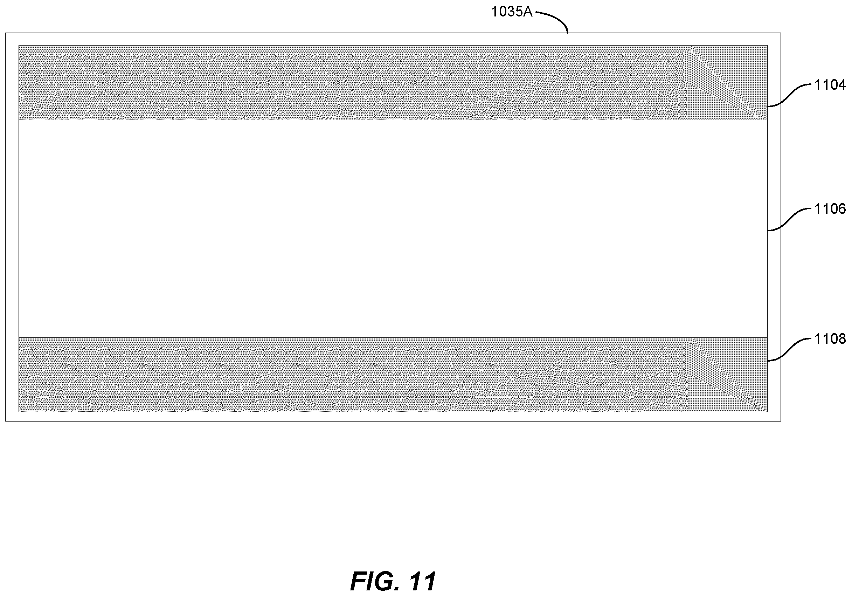

FIG. 11 illustrates one or more processors 1048A (referred to herein as "processor 1048A") facilitating output of digital content, having non-uniform resolution characteristics, on display 1035A. One or more processors 1048A will be referred to herein as processor 1048A. In aspects, processor 1048A may render foveated digital content on display 1035A. Foveated digital content corresponds to images, videos, 3D scenes, and other such comparable content that are presented on displays such that the content appears to have a non-uniform resolution. For example, processor 1048A may output (1) high resolution digital content on regions of display 1035A that align directly with a user's gaze and (2) low resolution content on regions of the display that are outside the user's gaze. The areas outside the user's gaze are peripheral regions and those that align with the user's gaze are foveal regions. For example, as illustrated in FIG. 11, peripheral regions 1104 and 1108 may be located on top and bottom portions of display 1035A such that each of peripheral regions 1104 and 1108 may occupy, e.g., 20% of the surface area of display 1035A.

In aspects, the area occupied by peripheral regions 1104 and 1108 may range from 20% to 35%, while foveal region 1106 may occupy any portion of display 1035A unoccupied by peripheral regions 1104 and 1108. For example, foveal region 1106 may occupy 65% to 80% of the surface area of display 1035A. Surface area percentages discussed herein are non-exhaustive and percentages other than the ones discussed here may apply. In aspects, the computing system 1020 may output digital content having resolution of, e.g., (1000 x 1000) pixels to (1920 x 1920) pixels, in foveal region 1106. In contrast, in peripheral regions 1104 and 1108, the computing system 1020 may output digital content having a resolution of approximately one-half or a quarter of the resolution of the content in foveal region. Other resolution ranges are also contemplated for peripheral regions 1104 and 1108.

The locations of foveal and peripheral regions may vary dynamically based on the areas of display 1035A gazed by the user. For example, if computing system 1020 detects the user gazing the top portion of display 1035A for a predetermined time frame such as a threshold time of 1 second or a multiple of tenths of a second (or other fractions of a second), processor 1048A may designated the user gazed region as a current foveal region (e.g., foveal region 1106) and facilitate the output of high resolution digital content on this region. In areas outside this newly designated foveal region, processor 1048A may display low resolution content. In this way, at any given time, processor 1048A may facilitate display of high resolution digital content on areas of display 1035A gazed by the user and low resolution digital content in areas external to the user's gaze.

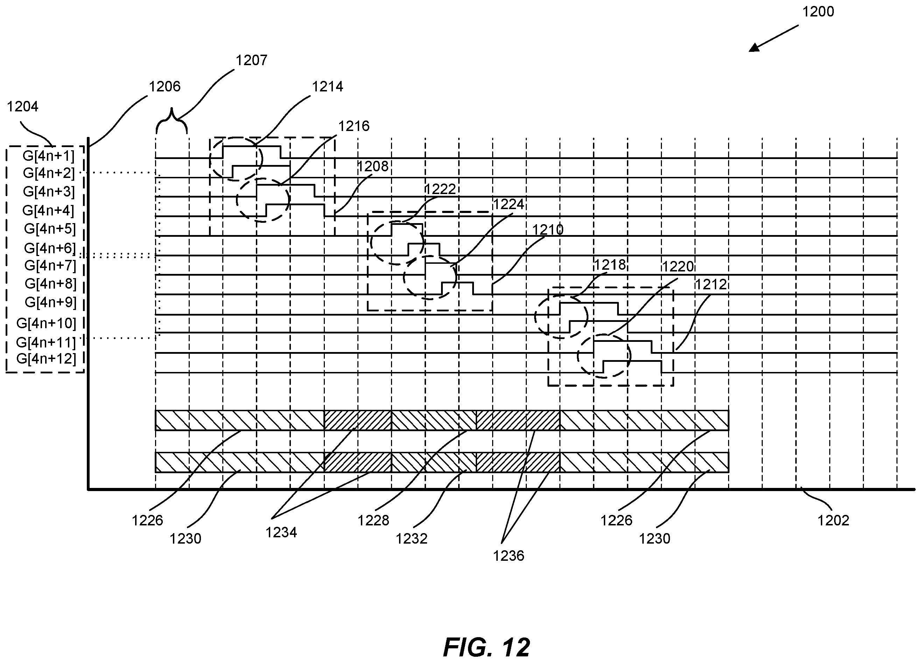

FIG. 12 illustrates a timing diagram 1200 of a display (e.g., display 1035A) configured to output foveated digital content. The timing diagram 1200 can be generated by processor 1048A and rendered on display 1035A or as part of one or more displays communicatively coupled with and external to the AR System 800, VR system 910, or other such comparable systems. Broadly, timing diagrams depict sequences and durations of electrical signals applied to various components over a predefined time frame. Contents of timing diagrams and be interpreted to determine, e.g., the manner in which different electrical signals interact with one another other, specific times when events occur, how long a particular signal or event lasts, etc.

Further, such timing diagrams may be analyzed to determine or illustrate various elements relating to displays that render foveated content, e.g., gate scan timing, source voltage output timing, common voltage ("VCom") waveforms, gamma curve application, duty cycle partitioning, frame cycle partitioning, and other such elements. Here, the timing diagram 1200 illustrates a multi-regional gate scanning scheme implemented to render or output foveated digital content on display 1035A. In particular, timing diagram 1200 depicts time values on x-axis 1202 and gate line indices 1204 on y-axis 1206. The time values on x-axis 1202 can range from 0 $\mu$s to 50 $\mu$s, 0 to 100 $\mu$s, or 0 to 200 $\mu$s. Other range values are also contemplated. Further, this time range can be periodically increased in increments of, e.g., 15 - 20 $\mu$s (interval 1207).

The gate line indices 1204 (referred to herein as "gate lines") represent and reference gate lines - conductive wires disposed on various parts of the AR system 800 and the VR system 900. These wires are operable to transport various types of electrical signals from a component of computing system 1020 to one or more additional components of system 1020. Each of the gate line indices 1204 correspond to a respective gate line (a particular conductive wire) that is operable to transfer electrical signals to, and thereby controls, a number of thin film transistors ("TFTs") in a particular row. Further, each TFT is connected to a respective distinct pixel. In other words, each gate line, by routing electrical signals to a plurality of TFTs in a particular row, controls the operation of a number of pixels connected to the TFTs. In aspects, the electrical signals correspond to various voltages such as gate voltages and source voltages.

A brief description of the notation representing gate indices 1204 is instructive. The letter "G" in the expression "G[4n+1]" represents a particular gate line and "4n+1" represents a particular row, namely a row that comprises a plurality of pixels. These pixels, cumulatively, facilitate display of digital content horizontally on a specific horizontal portion or row of display 1035A. Gate line indices 1204 represent 13 different gate lines, with each gate line operable to deliver gate voltages and source voltages generated by DDIC 1049, to 13 different rows of pixels. These 13 pixel rows, cumulatively, facilitate display of digital content across an entire surface area of display 1035A.

In operation, the gate lines deliver gate voltage pulses to a number of thin-film transistors (TFTs), each of which is (1) connected to a respective distinct pixel in a given pixel row and (2) delivers different electrical signals (e.g., gate voltages and source voltages) to a distinct pixel connected therewith. The gate lines delivering gate voltages to the TFTs facilitate operation of the TFTs in an activation mode (i.e. electric conduction mode). In other words, the gate voltages have a voltage value that meets or is within the bounds of a threshold voltage required to ensure that the TFTs create a conductive channel between the source and drain of the TFTs. Once the conductive channel is established (i.e. the TFTs are in an activation mode), the TFTs can route additional electrical signals, namely source voltages, to the respective distinct pixels connected to these TFTs. These source voltages correspond to analog values representative of grayscale and/or color values of digital content to be output on display 1035A. Specifically, each TFT in a particular row of TFTs routes a particular source voltage to the pixel connected therewith. The pixel then utilizes the received source voltage to control the brightness of content output on the display 1035A.

Each pixel may control a brightness of content display on a particular rectangular portion of display 1035A based on the magnitude of the source voltage that is received. For example, source voltages ranging from 4 Volts (V) to 7V are designated as high voltages and those ranging from .2 V to 3 V are designated as low voltages. Voltages in the high voltage range, when output on display 1035A, may appear bright to a viewer's eyes and those in the low voltage range may appear dim to the viewer's eyes. The pixel, as described herein, corresponds to a physical component that may include, e.g., a liquid crystal cell, color filter, storage capacitor, and a backlight unit, or some permutation or combination of these components.

Returning to FIG. 12, the timing diagram 1200 illustrates a total of three groups of gate voltages - voltage group 1208, voltage group 1210, and voltage group 1212. These groups include gate voltages that activate 12 different pixel rows, as described above. In aspects, processor 1048A, operating in conjunction with a digital to analog (D to A) converter (not shown) and one or more additional components, generates these gate voltages. The gate voltages in voltage groups 1208 and 1212 correspond to peripheral regions 1104 and 1108, respectively, while those in voltage group 1210 correspond to foveal region 1106. As such, voltage groups 1208 and 1212 activate a plurality of TFTs in rows corresponding to gate indices G[4n+1] to G[4n+4] and G[4n+10] to G[4n+13] and voltage group 1210 activates a plurality of TFTs in rows corresponding to gate indices G[4n+5] to G[4n+9]. As noted, activating the plurality of TFTs enables each TFT to route additional voltages, e.g., source voltages representative of image data, to each of the plurality of pixels across all rows.

In aspects, the gate voltages in voltage groups 1208 and 1212, generated by the computing system 1020, are routed to respective TFTs in each of the rows corresponding to gate indices G[4n+1] to G[4n+4] and G[4n+10] to G[4n+13] with minor time differences, namely time differences 1214, 1216, 1218, and 1220 (as indicated by circular dotted lines in voltage groups 1208 and 1212). Further the gate voltages in voltage group 1210 are also routed to TFTs corresponding to gate indices G[4n+5] to G[4n+9] with minor time differences, namely time differences 1222 and 1224. The computing system 1020, by generating and enabling the routing of gate voltages in this manner, provides multiple advantages. Routing gate voltages with minor time differences reduces instances of power spikes and voltage common voltage kickback, improves image quality and temporal uniformity, and enables smooth and nearly seamless transition from peripheral regions 1104 and 1108 to foveal region 1106.

FIG. 12 also includes graphical representations of gamma voltages and common voltages. In aspects, in order to control brightness or luminance levels of digital content output in peripheral regions 1104 and 1108 and foveal region 1106 such that differences in luminance levels across these regions is reduced, computing system 1020 may implement various steps. Specifically, processor 1048A of computing system 1020, operating in conjunction with the TFTs and pixels connected with these TFTs, may apply a first set of gamma based voltages to peripheral regions 1104 and 1108 (e.g., a set of peripheral region gamma voltages) and a second set of gamma based voltages to foveal region 1106 (e.g., a set of foveal region gamma voltages). Likewise, the computing system 1020, operating in combination with the TFTs and pixels connected with these TFTs, may apply a particular common voltage to peripheral regions 1104 and 1108 (e.g., a peripheral common voltage) and a specific common voltage to foveal region 1106 (e.g., a foveal common voltage).

In aspects, computing system 1020, namely processor 1048A, may generate peripheral gamma-based source voltages 1226 and foveal region gamma-based source voltages 1228 from two separate and distinct gamma curves - peripheral region gamma curve and foveal region gamma curve - stored in memory 1050A. Each gamma curve includes a plurality of grayscale input values - digital values from 0 to 255 - on the x axis and corresponding normalized luminance values on the y-axis. The peripheral region gamma curve differs from foveal region gamma curve in that foveal region gamma curve is steeper than the peripheral region gamma curve. Consequently, a luminance value for a particular grayscale input value on foveal region gamma curve is larger than a luminance value for the same grayscale input value on the peripheral region gamma curve. All of the source voltages - peripheral gamma-based source voltages 1226 and foveal region gamma-based source voltages 1228 - are based on or can correspond to a collection of reference voltages.

In operation, processor 1048A may access grayscale input values from both gamma curves, e.g., from memory 1050A of computing system 1020, and identify respective normalized luminance output values corresponding to each of the grayscale input values. Processor 1048A may then identify gamma source voltage values corresponding to the normalized luminance output values. For example, processor 1048A may access look up tables that include a listing of normalized luminance output values and their corresponding source voltage values. These look up tables may also be stored in memory 1050A. In aspects, the peripheral region gamma curve may have a look-up table (LUT1) dedicated for it and foveal region gamma curve may have another look-up table (LUT2) dedicated for it. The processor 1048A may utilize LUT1 to identify and generate peripheral region gamma based source voltages 1226 and LUT2 to identify and generate foveal region gamma based source voltages 1228.

Simultaneously or sequentially, processor 1048A may generate two separate and distinct common voltages - peripheral region common voltage 1230 and foveal region common voltage 1232. Each of these voltages may be generated based on user preferences and stored in memory 1050A or stored in memory 1050A as part of factory default settings. Processor 1048A may apply the peripheral common voltage relative to peripheral regions 1104 and 1108 and foveal common voltage relative to foveal region 1106. In aspects, processor 1048A may utilize peripheral region gamma based source voltages 1226, foveal region gamma based source voltages 1228, peripheral common voltage 1230 and foveal common voltage 1232 to determine peripheral region pixel voltages and foveal region pixel voltages. In particular, peripheral region pixel voltages and foveal region pixel voltages may be generated according to the following algorithm:

$$V_{pixel} = V_{source} - V_{com}$$

In operation, processor 1048 may determine (1) differences between peripheral region gamma based source voltages 1226 and peripheral region common voltage 1230 to determine pixel voltages (Vpixel) specific to peripheral regions 1104 and 1108 and (2) differences between foveal region gamma based source voltages 1228 and foveal region common voltage 1232 to determine pixel voltages specific to foveal region 1106. Finally, to control brightness of digital content output on display 1035A, processor 1048A may apply an electro-optical transfer function (EOFT) on the determined pixel voltages to determine output luminance values, which may be utilized by the rows of pixels to output digital content on display 1035A.

In short, processor 1048A, operating in conjunction with TFTs and pixels connected therewith, applies (1) a set of peripheral region gamma based source voltages 1226 in combination with the peripheral common voltage 1230 to peripheral regions 1104 and 1108, and (2) a set of foveal region gamma based source voltages in conjunction with foveal common voltage 1230 to foveal region 1106. In this way, processor 1048A facilitates reduction of luminance differences between foveal and peripheral regions such that the visual quality of digital content output of display 1035A is improved and visual discomfort due to gaze transitions between peripheral and foveal regions is decreased.

Processor 1048A further reduces adverse effects of luminance differences between foveal and peripheral regions by incorporating a delay or scan pause period for a predefined time frame, namely first scan pause period 1234 and second pause period 1236. In aspects, inclusion of such pause periods provides a smooth and approximately seamless transition from peripheral region 1104 to foveal region 1106 and from foveal region 1106 to peripheral region 1108. These pause periods also assist in maintaining uniform brightness and contrast levels during transitions between peripheral and foveal regions.

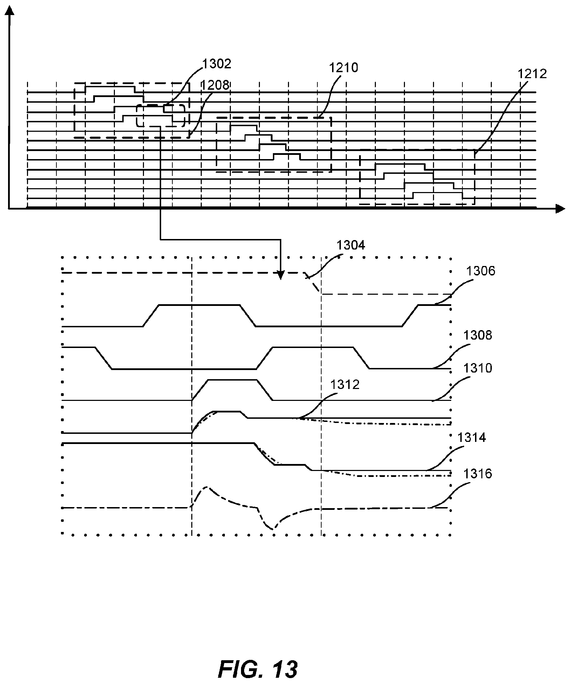

FIG. 13 is an expanded illustration of the timing diagram 1200 with an additional graphical representation depicting the adjustment of pixel timing of a plurality of pixels. In particular, FIG. 13 illustrates an expanded view of the behavior of various pixel related parameters during a transition from peripheral region 1104 to foveal region 1106. Broadly, adjusting pixel timing involves controlling a plurality of pixel timing parameters, e.g., gate voltage signal, demultiplexer control signals, source driver signal, common voltage signals, peripheral gamma voltage signals, and so forth. At least some of these pixel parameters are illustrated in FIG. 13. As stated, FIG. 13 includes a regional transition window 1302 representing a transition from peripheral region 1104 to foveal region 1106 and the behavior of various pixel parameters during this transition.

Gate line 1304 corresponds to the fourth gate voltage in voltage group 1208. The value of the gate voltage remains high for multiple time intervals (e.g., multiple iterations of interval 1207) and then reduces towards the end of one of the time intervals. Demultiplexer signal 1306, which high, enables processor 1048A to route peripheral region based source voltages to each pixel in a particular row. For example, when Demux signal 1306 is high, TFTs in the row corresponding to one of the gate indices 1204, namely G[4n+4], route peripheral region based source voltages to each pixel in the row represented by G[4n+4]. In contrast, when gate line 1304 reduces from high to low, processor 1048A selects demultiplexer signal 1308 to begin routing foveal region based source voltages to pixels in rows represented by G[4n+5] to G[4n+9] of gate indices 1204. In aspects, as illustrated in FIGS. 12 and 13, foveal region based source voltages may be routed in these rows after a pause period. Source drive signal 1310 represents operation of a source driver (e.g., a component included as part of processor 1048A), namely routing foveal region based source voltages to the pixels in the rows represented by G [4n+5] to G[4n+9]. Next data signal 1312 represents identifiers for peripheral region based source voltages and data signal 1314 represents identifiers for foveal region based source voltages. Processor 1048A utilizes these identifiers to route these voltages in a particular manner to pixels in various rows. Finally common voltage signal 1316 demonstrates the manner in which voltage changes from peripheral region 1104 to foveal region 1106. As shown, the common voltage signal 1316 is high in peripheral region 1104 and low in foveal region 1106.

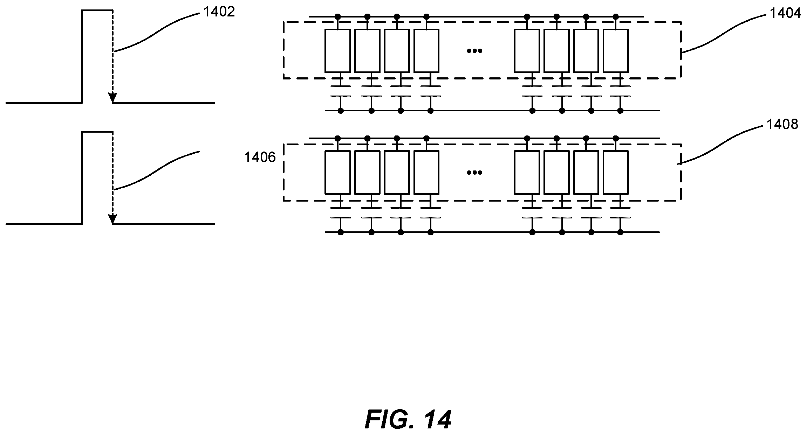

FIG. 14 illustrates two gate signals being applied to two rows of pixels. Specifically, as illustrated, processor 1048A applies example gate signal 1402, e.g., a specific gate voltage, to all TFTs in a particular row, which in turn applies the gate voltage to example pixels 1404 in that row. Likewise, processor 1048A applies example gate signal 1406 to a plurality of example pixels 1408, which in turn applies the gate signal 1406 to all TFTs in a particular row, which in turn applies the gate voltage to a plurality of example pixels 1408 in that row. In aspects, processor 1048A may apply example gate signals 1402 and 1406 substantially simultaneously to the example pixels 1404 and the example pixels 1408. In this scenario, when the gate signals 1402 and 1406 fall from, e.g., 1 V to 0 V, the falling edge (of the voltage) of these signals causes a capacitive coupling spike (or a combination of voltages spikes associated with common voltages signals corresponding to the gate signals 1402 and 1406). This combined voltage spike results in various types of unintended effects in digital content output on display 1035A, e.g., digital content distortion, flickering of content on display 1035A, and non-uniform content display in various parts of display 1035A. To address and overcome these distortions, processor 1048A may apply the example gate signal 1402 to the example pixels 1404, implement a delay of a predefined time frame (e.g., a few seconds, a few fractions of a second, and so forth), and then apply example gate signal 1406 to the example pixels 1408.

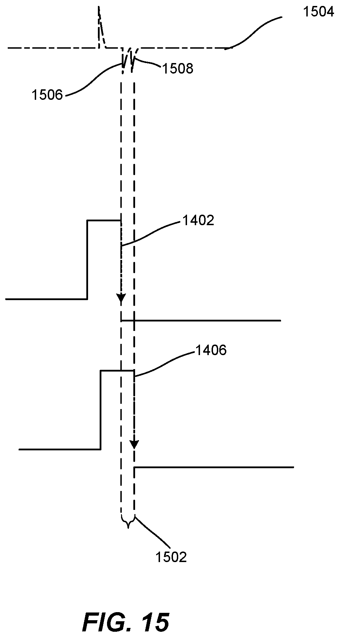

FIG. 15 depicts a reduced voltage kickback as a result of delayed application of the example gate signals 1402 and 1406. As illustrated, processor 1048A applies the example signal 1402 to the example pixels 1404 at a particular time, implements example delay 1502, and then implements the example gate signal 1406 to the example pixels 1408. Consequently, voltage spikes caused as a result of applying the example signals 1402 and 1406 are disaggregated. As shown, example common voltage signal 1504 has two separate and disaggregated voltage spikes - voltage spike 1506 and voltage spike 1508. The voltage spike 1506 results from the application of the example signal 1402 and voltage spike 1508 results from the delayed application of the example signal 1406. Such disaggregation addresses and overcomes the adverse effects of voltage kickback, namely digital content distortion, content non-uniformity, and flickering of content.

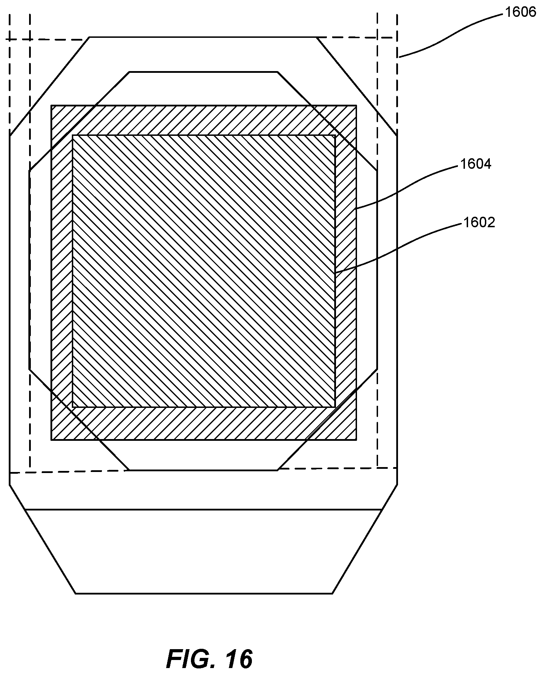

FIG. 16 illustrates a graphical representation in which digital content is output according to different gamma based source voltages on different areas of display 1035A. For example, example region 1602 is a full resolution high fidelity region in which digital content may be output according to a gamma based source voltage that may be higher than the gamma voltages associated with regions 1604 and 1606, respectively. In aspects, the gamma source voltages of example region 1602 may correspond to a full resolution high fidelity region such as foveal region 1106. In contrast, digital content in example region 1604 may be output according to a gamma based source voltage that is lower than the one associated with the example region 1602, and as such, example region 1604 may correspond to peripheral regions 1104 and 1108. In this scenario, utilizing different gamma voltages for outputting digital content in different regions has an advantages effect of reducing difference in brightness levels between peripheral regions 1104 and 1108 and foveal region 1106, reducing instances of mura, and thereby improving luminance uniformity across these regions.

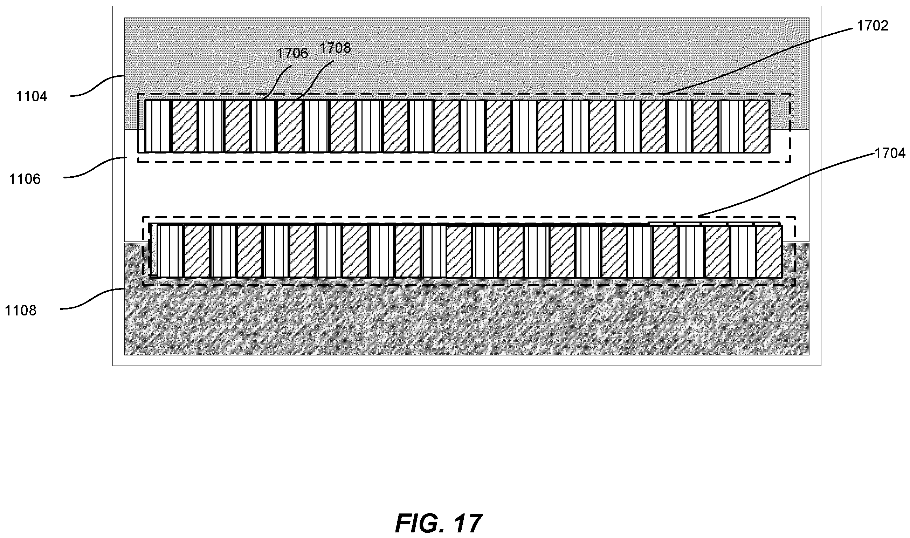

FIG. 17 illustrates mixed zones at two different boundaries of peripheral region 1104 and foveal region 1106 and foveal region 1106 and peripheral region 1108. The mixed zones 1702 and 1704 operate to ease a visual transition from peripheral region 1104 to foveal region 1106 and from foveal region 1106 to peripheral region 1108. The mixed zones 1702 and 1704 ease the visual transition as a result of processor 1048A routing both peripheral region gamma based source voltages and foveal region gamma based source voltages to each of the mixed zones 1702 and 1704 such that each of these regions simultaneously includes digital content having pixel brightness characteristics from both peripheral regions 1104 and 1108 and foveal region 1106. For example, pixels that are activated based on peripheral region gamma based source voltages and foveal region gamma based source voltages can appear such that a first pixel in the mixed zone is activated by one of the peripheral region gamma based source voltage (as shown by pattern 1706) and a second pixel that is adjacent to the first pixel can be activated by foveal region gamma based source voltage (as shown by pattern 1708). This mixing of high fidelity and low fidelity pixels enables a user's eye to perceive a smooth and nearly seamless transition from peripheral region 1104 to foveal region 1106 and from foveal region 1106 to peripheral region 1108.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the examples disclosed herein. This exemplary description is not intended to be exhaustive or to be limited to any precise form disclosed. Many modifications and variations are possible without departing from the scope of the present disclosure. The examples disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

**Claims**

1. A computer-implemented method comprising:

   determining a brightness difference between peripheral regions of a display and a foveal region of the display; and
   adjusting, responsive to the determining, the brightness difference by:

   applying a set of peripheral region gamma voltages to the peripheral regions and an additional set of foveal gamma voltages to the foveal region; and
   setting a peripheral region common voltage to the peripheral regions and a foveal region common voltage to the foveal region.

2. The computer-implement method of claim 1, wherein a top boundary of the foveal region is contiguous with a boundary of one of the peripheral regions and a bottom boundary of the foveal region is contiguous with a boundary of an additional one of the peripheral regions.

3. The computer-implemented method of claim 1 or 2, wherein:
   the set of peripheral region gamma voltages corresponds to a collection of reference voltages, each reference voltage in the collection of reference voltages corresponding to a respective digital input value.

4. The computer-implemented method of claim 3, wherein:
   the additional set of foveal region gamma voltages corresponds to an additional collection of reference voltages, each reference voltage in the additional collection of reference voltages corresponding to a respective additional digital input value.

5. The computer-implemented method of claim 3 or 4, wherein:

   each respective digital input value corresponds to a respective luminance value specific to at least a pixel in at least one of the peripheral regions; and
   each additional respective digital input value corresponds to a respective additional luminance value specific to at least an additional pixel in foveal region.

6. The computer-implemented method of any preceding claim, further comprising:
   including a pause period for a predefined time frame after the setting of the set of peripheral region gamma voltages.

7. The computer-implemented method of any preceding claim, further comprising:

   applying a peripheral region gate signal to a set of pixels in at least one of the peripheral regions; and
   applying a foveal region gate signal to a set of pixels in foveal region.

8. The computer-implemented method of claim 7, wherein each of the peripheral region gate signal and foveal region gate signal is a pulsed voltage.

9. The computer-implemented method of any preceding claim, further comprising:
   applying peripheral region pixel timing parameters to a set of pixels in at least one of the peripheral regions.

10. The computer-implemented method of any preceding claim, further comprising:
    applying foveal region pixel timing parameters to a set of pixels in foveal region.

11. The computer-implemented method of claim 9 or 10, wherein the peripheral region pixel timing parameters and foveal region pixel timing parameters correspond to a demultiplexer on time parameter, a demultiplexer dead time parameter, or a source driver signal.

12. A system comprising:

at least one physical processor;
a display;
physical memory comprising computer-executable instructions that, when executed by the physical processor, cause the physical processor to carry out the method of any preceding claim.

13. A computer-readable medium comprising one or more computer-executable instructions that, when executed by at least one processor of a computing device, cause the computing device to carry out the method of any of claims 1 to 11.

14. A computer program product comprising instructions that, when executed by at least one processor of a computing device, cause the computing device to carry out the method of any of claims 1 to 11.

100

```
       ┌─────────────────┐
       │      Start       │
       └─────────────────┘
                │
                ▼
┌───────────────────────────────────────────────┐
│ Determine a brightness difference between      │
│ peripheral regions of a display and a foveal   │
│ region of the display                          │
│                    110                         │
└───────────────────────────────────────────────┘
                │
                ▼
┌───────────────────────────────────────────────┐
│ Adjust, responsive to the determining, the     │
│ brightness difference                          │
│                    120                         │
└───────────────────────────────────────────────┘
                │
                ▼
       ┌─────────────────┐
       │       End        │
       └─────────────────┘
```

*FIG. 1*

**FIG. 2**

EP 4 672 221 A1

AR System
300

306

316    318

I'm gonna be a little late

Me

That's okay

Q W E R T Y U I O P
A S D F G H J K L ⌫
⬆ Z X C V B N M Enter

308    304

302

**FIG. 3**

EP 4 672 221 A1

AR System
400

408

410

450

406

402

**FIG. 4A**

AR System
400

410

450

**+500**

**FIG. 4B**

AR System
500

560

530

508

520

510

**FIG. 5A**

AR System
500

520

530

560

510

+500

**FIG. 5B**

FIG. 6

Computing System 700

**Watch Body Computing System 760**

620

**Peripherals Interface 761**

**Sensors 721**

| Coupling Sensor | 762 |
| Imaging Sensor | 763 |
| SpO2 Sensor | 764 |
| EMG Sensor | 765 |
| Capacitive Sensor | 766 |
| Heart Rate Sensor | 767 |
| IMU Sensor | 768 |

NFC 769
GPS 770
LTE 771
Wi-Fi/BT 772
Buttons 773
Display 605
Speaker 774

Microphone 775

**Cameras 725**

Front Camera 725a
Rear Camera 725b

Haptic Device 776

**Controller 777**

Haptic Controller 778

Processor(s) 779

**Memory 780**

| Operating System | 781 |
| Applications | 782 |
| Comm. Interface | 783 |
| Graphics | 784 |
| Data Management | 785 |

**Data 787**

| Profile Data | 788A |
| Sensor Data | 789A |
| Media Content Data | 790 |
| Application Data | 791 |

**Power System 795**

Charger Input 796 ⟷ PMIC 797 ⟷ Battery 798

**Wearable Band Computing System 730**

610

**Peripherals Interface 731**

**Sensors 713**

| Coup. Sensor | 732 | Cap Sensor | 736 |
| SpO2 Sensor | 734 | HR Sensor | 737 |
| EMG Sensor | 735 | IMU Sensor | 738 |

Display 733 | Speaker 744 | MIC 745
Camera 755

NFC 739
GPS 740
LTE 741
Wi-Fi/BT 742
Buttons 743

Haptic Device 746

**Controller 747**

Haptic Controller 748

Processor(s) 749

**Memory 750**

| Operating System | 751 |
| Comm. Interface | 752 |
| Data Management | 753 |

**Data 754**

| Profile Data | 788B |
| Sensor Data | 789B |

**Power System 756**

Charger Input 757 ⟷ PMIC 758 ⟷ Battery 759

*FIG. 7*

EP 4 672 221 A1

*FIG. 8*

VR System
900

FIG. 9A

VR System
900

FIG. 9B

AR System
800

VR System
910

1020

**Peripherals Interface** 1022A

| Sensors | 1023A |
| Coupling Sensor | 1024 |
| Acoustic Sensor | 1025 |
| Imaging Sensor | 1026 |
| EMG Sensor | 1027 |
| Capacitive Sensor | 1028 |
| IMU Sensor | 1029 |

| NFC | 1030 |
| GPS | 1031 |
| LTE | 1032 |
| Wi-Fi/BT | 1033 |
| Buttons | 1034 |

Display 1035A
DDIC 1049

1037
Microphone

1038A
**Cameras**
1039A
Left Camera
1039B
Right Camera

Speaker 1036A
Haptic Device

**Controller** 1046
Haptic Controller 1047

Processor(s) 1048A

**Memory** 1050A

| Operating System | 1051 |
| Applications | 1052 |
| Comm. Interface | 1053A |
| Graphics | 1054A |
| AR Processing | 1055A |

**Data** 1060A

| Profile Data | 1061 |
| Sensor Data | 1062A |
| Media Content Data | 1063A |
| AR Application Data | 1064A |

Power System 1042A | Charger Input 1043 ↔ PMIC 1044 ↔ Battery 1045A

1040

1090

**Peripherals Interface** 1022B

Sensors 1023B | Display 1035B
Speaker 1036B | Camera 1038B

Processor(s) 1048B

**Power System** 1042B
Battery 1044B

**Memory** 1050B

| Comm. Interface | 1053B |
| Graphics | 1054B |
| AR Processing | 1055B |

**Data** 1060B
Sensor Data 1062B
AR App Data 1064B

*FIG. 10*

EP 4 672 221 A1

*FIG. 11*

EP 4 672 221 A1

**FIG. 12**

EP 4 672 221 A1

FIG. 13

FIG. 14

**FIG. 15**

**FIG. 16**

EP 4 672 221 A1

FIG. 17

Europäisches
Patentamt

European
Patent Office

Office européen
des brevets

# EUROPEAN SEARCH REPORT

**Application Number**

EP 25 18 5252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/415239 A1 (WANG MINGLIANG [CN] ET AL) 29 December 2022 (2022-12-29)<br>* paragraph [0090] - paragraph [0100] *<br>* figure 4 *<br>----- | 1-14 | INV.<br>G09G5/10 |
| A | US 2022/343863 A1 (LEE WONSUK [KR] ET AL) 27 October 2022 (2022-10-27)<br>* paragraph [0050] - paragraph [0067] *<br>* figures 1, 3, 4 *<br>----- | 1-14 | |
| A | CN 113 327 538 A (HKC CO LTD) 31 August 2021 (2021-08-31)<br>* paragraph [0001] - paragraph [0053] *<br>----- | 1-14 | |

**TECHNICAL FIELDS SEARCHED (IPC)**

G09G

The present search report has been drawn up for all claims

| Place of search | Date of completion of the search | Examiner |
|---|---|---|
| The Hague | 21 October 2025 | Etienne, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5252

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2025

| Patent document cited in search report | Publication date | Patent family member(s) | | Publication date |
|---|---|---|---|---|
| US 2022415239 A1 | 29-12-2022 | CN | 113516937 A | 19-10-2021 |
| | | US | 2022415239 A1 | 29-12-2022 |
| | | US | 2023410713 A1 | 21-12-2023 |
| US 2022343863 A1 | 27-10-2022 | CN | 111179798 A | 19-05-2020 |
| | | CN | 117789634 A | 29-03-2024 |
| | | CN | 117789635 A | 29-03-2024 |
| | | KR | 20200053954 A | 19-05-2020 |
| | | KR | 20240045174 A | 05-04-2024 |
| | | KR | 20250016371 A | 03-02-2025 |
| | | US | 2020152134 A1 | 14-05-2020 |
| | | US | 2022343863 A1 | 27-10-2022 |
| | | US | 2024404477 A1 | 05-12-2024 |
| CN 113327538 A | 31-08-2021 | CN | 113327538 A | 31-08-2021 |
| | | WO | 2023010795 A1 | 09-02-2023 |

EPO FORM P0459

For more details about this annex : see Official Journal of the European Patent Office, No. 12/82